# EUROPEAN PATENT APPLICATION

(11) **EP 4 851 085 A1**
(43) Date of publication of application: **09.12.2026**
(21) Application number: 24928141.1
(22) Date of filing: 08.11.2024
(51) Int. Cl.: B65H 37/04, B65G 47/22, B65G 47/88, H01M 4/139

(54) **PASTING DEVICE, BATTERY CELL PASTING APPARATUS AND BATTERY CELL PASTING METHOD**

(30) Priority: 06.03.2024 CN 202410254267
(71) Applicant: Contemporary Amperex Technology Co., Limited, Ningde, Fujian 352100 (CN)
(72) Inventor: CAO, Xiaoyan, Ningde, Fujian 352100 (CN); WU, Kai, Ningde, Fujian 352100 (CN)
(74) Representative: Lorenz Seidler Gossel Part. mbB
(86) International application number: PCT/CN2024/131017
(87) International publication number: WO 2025/185212

(57) **Abstract**

The present application belongs to the technical field of battery manufacturing, and provides a pasting device, a battery cell pasting apparatus and a battery cell pasting method. The pasting device comprises a base, a positioning mechanism and a pasting mechanism. The base is configured to be used for placement of a component to be pasted. The positioning mechanism is configured to be used for fixing said component to a first preset position of the base. The pasting mechanism comprises a placement platform and a pasting assembly. The placement platform is configured to be used for placement of an adhesive. The pasting assembly is configured to be used for suctioning the adhesive, and moving from the placement platform to the first preset position so as to affix the adhesive to said component. The pasting device can fix said component by means of the positioning mechanism, and then the pasting assembly affixes the adhesive placed on the placement platform to said component located on the base, thereby automatically pasting said component. The present application exhibits a fast pasting speed and high pasting efficiency, thereby improving battery production efficiency. In addition, automated pasting reduces human operations, thereby saving labor costs.

## Description

### CROSS-REFERENCE

The present application refers to Chinese Patent Application No. 202410254267.7, filed on March 06, 2024 and entitled "TAPING APPARATUS, BATTERY CELL TAPING DEVICE, AND METHOD FOR TAPING BATTERY CELL", which is incorporated herein by reference in its entirety.

### TECHNICAL FIELD

The present application relates to the technical field of battery processing, and in particular, to a taping apparatus, a battery cell taping device, and a method for taping a battery cell.

### BACKGROUND

Energy conservation and emission reduction are the keys to the sustainable development of the automobile industry. Electric vehicles have become an important part of the sustainable development of the automobile industry due to their energy-saving and environmental protection advantages. For electric vehicles, the battery technology is an important factor in their development.

A battery generally includes a plurality of battery cells. During the production process of the battery, an adhesive tape is attached to the surfaces of the battery cells, such that the battery cells can be adhesively connected to other components. In the related art, an operator manually applies an adhesive tape to the battery cells, and the taping efficiency is relatively slow, which affects the production efficiency of the battery.

### SUMMARY

The present application aims to solve at least one of the technical problems existing in the background. Therefore, an objective of the present application is to provide a taping apparatus, a battery cell taping device, and a method for taping a battery cell, so as to improve the taping efficiency of a battery cell.

Embodiments of a first aspect of the present application provide a taping apparatus. The taping apparatus includes: a base, configured to place a to-be-taped member; a positioning mechanism, configured to fix the to-be-taped member to a first preset position of the base; and a taping mechanism, including a placement platform and a taping assembly, the placement platform being configured to place an adhesive tape, and the taping assembly being configured to adsorb the adhesive tape and move from the placement platform to the first preset position to attach the adhesive tape to the to-be-taped member.

In the technical solutions according to the embodiments of the present application, the taping apparatus can fix the to-be-taped member by means of the positioning mechanism, and then the taping assembly attaches the adhesive tape placed on the placement platform to the to-be-taped member on the base, so as to realize automatic taping of the to-be-taped member. The taping speed is relatively fast, and the taping efficiency is relatively high, thereby improving the production efficiency of the battery. In addition, automatic taping reduces human operations, thereby saving labor costs.

In some embodiments, the base includes: a support; a conveying platform, located on the support, the conveying platform being configured to place the to-be-taped member; and a power assembly, connected to the support, the power assembly being configured to drive the conveying platform to move, such that the to-be-taped member moves to a first preset position. The power assembly drives the conveying platform to move, such that the to-be-taped member can move to the first preset position. After the to-be-taped member moves to the first preset position, the power assembly is controlled to stop operating, such that the to-be-taped member can move to the first preset position. In this way, the movement of the to-be-taped member is controlled, which is more convenient.

In some embodiments, anti-falling barrier rods are arranged at side edges of a surface, on which the conveying platform is arranged, of the support. The arrangement of the anti-falling barrier rods can reduce the risk of falling of the to-be-taped member, and improve the safety of the to-be-taped member during the taping process.

In some embodiments, the positioning mechanism is configured to block movement of the to-be-taped member to fix the to-be-taped member to the first preset position. The positioning mechanism may block the movement of the to-be-taped member. In this way, even if the to-be-taped member moves to the first preset position, the power assembly does not stop operating, and the to-be-taped member may be fixed at the first preset position by the positioning mechanism, thereby achieving the positioning of the to-be-taped member.

In some embodiments, a movement direction of the to-be-taped member is a first direction, and the positioning mechanism includes: a first drive assembly, connected to the support; and a first stop block, connected to the first drive assembly; where the first drive assembly is configured to drive the first stop block to move, such that at least a part of the first stop block is located at a second preset position to block the to-be-taped member, thereby enabling the to-be-taped member to be located at the first preset position, the first preset position being adjacent to the second preset position in the first direction. During the taping process, the first drive assembly drives the first stop block to move to the second preset position. When the to-be-taped member moves to the first preset position adjacent to the second preset position, the first stop block may block the movement of the to-be-taped member, and the to-be-taped member does not continue to move under the action of inertia, thereby improving the accuracy of the positioning mechanism in positioning the to-be-taped member.

In some embodiments, positioning holes are formed in one of a surface, facing the first stop block, of the taping assembly and a surface, facing the taping assembly, of the first stop block, positioning pins are arranged on the other of the surface, facing the first stop block, of the taping assembly and the surface, facing the taping assembly, of the first stop block, and during a process of taping of the to-be-taped member by the taping assembly, the positioning pins are located in the positioning holes. The positioning pins and the positioning holes are provided. The positioning pins are located in the positioning holes during taping. During each taping process, the relative position between the taping assembly and the first stop block remains unchanged. Since the relative position between the first stop block and the to-be-taped member is fixed, the relative position between the taping assembly and the to-be-taped member remains unchanged. For battery cells of the same model, the shapes of the battery cells are the same, such that the taping assembly can attach an adhesive tape to the same position on the battery cells during the taping process. The accuracy of taping of the battery cells is higher, and the taping effect is better.

In some embodiments, the first stop block includes: a first stop rod, connected to the first drive assembly; and a second stop rod, connected to the first stop rod, the first stop rod intersecting with the second stop rod, and in a case that the to-be-taped member is located at the first preset position, the first stop rod and the second stop rod being fitted to two adjacent side edges of the to-be-taped member, respectively. The first stop block includes a first stop rod and a second stop rod, and the first stop rod and the second stop rod are fitted to two adjacent side edges of the to-be-taped member, respectively, such that the contact area between the first stop block and the to-be-taped member is larger, and the positioning effect of the positioning mechanism on the to-be-taped member is better. Meanwhile, when the to-be-taped member moves toward the first stop rod, the first stop rod may block the movement of the to-be-taped member, or when the to-be-taped member moves toward the second stop rod, the second stop rod may block the movement of the to-be-taped member, which can better fix the to-be-taped member and improve the subsequent taping effect.

In some embodiments, the positioning mechanism further includes: a second drive assembly, connected to the support, the second drive assembly and the first drive assembly being located on two opposite sides of the support disposed in a second direction, and the second direction intersecting with the first direction; and a second stop block, connected to the second drive assembly; where the second drive assembly is configured to drive the second stop block to move, such that in the case that the to-be-taped member is located at the first preset position, the to-be-taped member is located between the first stop block and the second stop block. When the to-be-taped member is located at the first preset position, the to-be-taped member is located between the first stop block and the second stop block, such that two opposite sides of the to-be-taped member are both blocked, thereby achieving a better positioning effect on the to-be-taped member, reducing the possibility of movement of the to-be-taped member, and improving the subsequent taping effect.

In some embodiments, the second stop block includes: a third stop rod, connected to the second drive assembly; and a fourth stop rod, connected to the third stop rod, the third stop rod intersecting with the fourth stop rod, in a case that the to-be-taped member is located at the first preset position, the third stop rod and the fourth stop rod being fitted to two adjacent side edges of the to-be-taped member, respectively, the third stop rod being opposite to the first stop rod, and the fourth stop rod being opposite to the second stop rod. The first stop rod, the second stop rod, the third stop rod, and the fourth stop rod form a structure similar to a box, and the battery cell is located in the box; that is, the movement of the battery cell is limited from four directions, which can better fix the to-be-taped member and improve the subsequent taping effect.

In some embodiments, the taping apparatus further includes: a distance sensor, located on the support, the distance sensor being configured to detect a distance between the distance sensor and the to-be-taped member; and a controller, in communication connection with both the distance sensor and the power assembly; where the distance sensor is further configured to send the distance between the distance sensor and the to-be-taped member to the controller, and the controller is configured to control the power assembly to stop operating on the basis that the distance between the distance sensor and the to-be-taped member is less than or equal to a preset distance value. The distance between the distance sensor and the to-be-taped member is detected by the distance sensor, and the controller controls the operation of the power assembly on the basis of the distance between the distance sensor and the to-be-taped member, such that the position of the to-be-taped member is automatically controlled, and thus labor costs are reduced, and the taping apparatus is more automated.

In some embodiments, the placement platform includes: a support plate, provided with a first end and a second end opposite to each other; where the adhesive tape includes a plurality of adhesive strips disposed side by side, an arrangement direction of the plurality of adhesive strips is the same as an arrangement direction of the first end and the second end, the plurality of adhesive strips are located between the first end and the second end, and a distance between an adhesive strip, close to the second end, of the plurality of adhesive strips and the second end remains constant. The adhesive strips are placed on the support plate to provide a placement space for the adhesive strips. Meanwhile, the distance between the adhesive strip, close to the second end, of the plurality of adhesive strips and the second end remains constant; that is, taping is performed multiple times. The relative positions of the adhesive strips, close to the second end, of the plurality of adhesive strips and the second end are fixed, and the taping assembly can adsorb the adhesive strip of the second end all the time during the process of adsorbing the adhesive strips. In this way, the trajectory of each movement of the taping assembly is the same, and it is simpler to control the movement of the taping assembly.

In some embodiments, the placement platform further includes: a stop strip, located on a same side of the support plate as the adhesive strips, the stop strip being close to the second end, the plurality of adhesive strips being located between the first end and the stop strip, and an adhesive strip, close to the stop strip, of the plurality of adhesive strips abutting against the stop strip; and first elastic elements, located on a side, facing away from the stop strip, of the support plate, the first elastic elements being connected to the support plate; where the adhesive tape further includes a release paper, the plurality of adhesive strips are all located on the release paper, a portion, on which the adhesive strips are arranged, of the release paper is fitted to a plate surface of the support plate, and the other portion of the release paper passes through the second end to be connected to the first elastic elements. After the taping assembly adsorbs the adhesive strip, a gap is formed between the adhesive strip and the stop strip. In this case, the stop strip cannot limit the movement of the adhesive strip. Under the elastic force of the first elastic element, the release paper moves toward the second end, and the adhesive strip on the release paper moves along with the release paper, such that the adhesive strip close to the stop strip abuts against the stop strip. The distance between the stop strip and the second end is fixed, such that the distance between the adhesive strip close to the second end and the second end is fixed, and the adhesive strip does not need to be manually controlled to move, thereby reducing labor costs and implementing automated taping.

In some embodiments, the first elastic elements are connected to the support plate through first adjusting bolts, and the first adjusting bolts are configured to adjust the distances between the first elastic elements and the second end. The first elastic elements pull the release paper to move by an elastic force. As the number of taping times increases, the release paper moves toward the first elastic elements, and the first elastic elements gradually recover from the deformation. When the first elastic elements return to an inelastic state, the first elastic elements can no longer provide the elastic force to pull the release paper to move. In this case, the distance between the first elastic element and the second end can be adjusted by screwing the first adjusting bolt, such that the distance between the first elastic element and the second end increases. In this case, the release paper may pull the first elastic element, and the first elastic element may generate an elastic force again, such that the first elastic element can pull the release paper to move by the elastic force.

In some embodiments, the placement platform further includes: second elastic elements, located on the same side of the support plate as the adhesive strips, the second elastic elements being connected to the support plate, and the second elastic elements abutting against an end, away from the second end, of the adhesive strip. The second elastic element has an elastic force to push the adhesive strip to move toward the second end, such that the distance between the adhesive strip, close to the second end, of the plurality of adhesive strips and the second end remains constant.

In some embodiments, the second elastic elements are movably connected to the support plate through second adjusting bolts, and the second adjusting bolts are configured to adjust distances between the second elastic elements and the second end. The second elastic elements pull the release paper by an elastic force. As the number of taping times increases, the release paper moves toward the first elastic elements. The second elastic elements push the adhesive strip by the elastic force, and as the number of taping times increases, the adhesive strip moves toward the second end, and the second elastic elements gradually recover from the deformation. When the second elastic elements return to an inelastic state, the second elastic elements may not be able to push the adhesive strip to move. In this case, the distances between the second elastic elements and the second end can be adjusted by screwing the second adjusting bolts, so as to increase the deformation of the second elastic elements and the elastic force provided by the second elastic elements, such that the second elastic elements can push the adhesive strip to move.

In some embodiments, the placement platform further includes: limiting strips, located on the support plate, the limiting strips being located on two opposite sides of the adhesive strips in a length direction. The limiting strips can limit the movement of the adhesive strips in an extension direction thereof, thereby reducing the movement of the adhesive strips and improving the subsequent taping effect.

In some embodiments, the taping assembly includes: a sliding element, including a first slide rail and a second slide rail, the second slide rail being connected to the first slide rail, the second slide rail being movable along a track of the first slide rail, the track of the first slide rail being parallel to an arrangement direction of the placement platform and the first preset position, and a track of the second slide rail being perpendicular to a to-be-taped surface of the to-be-taped member; and a taping element, connected to the second slide rail, the taping element being movable along the track of the second slide rail. By arranging the first slide rail and the second slide rail, the taping element may move in at least two directions. The taping element can adsorb the adhesive tape on the placement platform, and meanwhile, can convey the adhesive tape on the placement platform to the first preset position and attach the adhesive tape to the battery cell.

In some embodiments, the taping element includes: a connecting member, connected to the second slide rail; a taping plate, located on a side, facing the to-be-taped member, of the connecting member; connecting rods, two ends of the connecting rods being connected to the connecting member and the taping plate, respectively; and buffer springs, sleeving the connecting rods, two ends of the buffer springs abutting against the taping plate and the connecting member, respectively. When the taping plate attaches the adhesive tape to the battery cell, the taping plate moves in a third direction and applies pressure to the battery cell, such that the adhesive tape is attached to the battery cell. The arrangement of the buffer springs may form a buffer when the taping plate applies pressure to the battery cell, reduce the pressure applied by the taping plate to the battery cell, and reduce the possibility of damage to the battery cell caused by excessive pressure.

In some embodiments, the taping apparatus further includes: an image acquisition mechanism, configured to acquire an image of the to-be-taped member after taping. The image acquisition mechanism acquires the image of the to-be-taped member after taping, and the taping quality can be determined based on the image, thereby facilitating real-time knowledge of the taping quality by an operator without affecting the taping process to a certain extent.

Embodiments of a second aspect of the present application provide a battery cell taping device. The taping device includes the taping apparatus according to any one of the above embodiments, and the taping apparatus is configured to attach an adhesive tape to the battery cell.

In some embodiments, the battery cell includes a prismatic battery cell, and the taping apparatus includes two taping mechanisms; one taping mechanism of the two taping mechanisms is configured to attach an adhesive tape to two opposite side edges of the prismatic battery cell, and the other taping mechanism of the two taping mechanisms is configured to attach the adhesive tape to the other two opposite side edges of the prismatic battery cell. The major surface of the prismatic battery cell has four side edges, and two opposite side edges of the four side edges extend in the same direction. Two taping mechanisms are provided. One taping mechanism may be configured to attach an adhesive tape to the two opposite side edges of the prismatic battery cell, and the other taping mechanism may be configured to attach the adhesive tape to the other two opposite side edges of the prismatic battery cell, thereby achieving the taping of the four side edges of the major surface of the prismatic battery cell.

Embodiments of a third aspect of the present application provide a method for taping a battery cell. The method includes: fixing the battery cell to a first preset position of a base by using a positioning mechanism; and controlling a taping assembly to adsorb an adhesive tape from a placement platform, and to move from the placement platform to the first preset position to attach the adhesive tape to the battery cell.

In some embodiments, fixing the battery cell to the first preset position of the base by using the positioning mechanism includes: placing the battery cell on a conveying platform; and controlling a power assembly to operate to drive the conveying platform to move, such that the battery cell moves to the first preset position.

In some embodiments, controlling the power assembly to operate to drive the conveying platform to move, such that the battery cell moves to the first preset position includes: detecting, by a distance sensor, a distance between the distance sensor and the battery cell, and conveying the distance between the distance sensor and the battery cell to a controller; and controlling, by the controller, the power assembly to stop operating in response to the distance between the distance sensor and the battery cell being less than or equal to a preset distance value.

In some embodiments, fixing the battery cell to the first preset position of the base by using the positioning mechanism further includes: controlling a first drive assembly to drive a first stop block to move, such that at least a part of the first stop block is located at a second preset position to block the battery cell, thereby enabling the battery cell to be located at the first preset position, the first preset position being adjacent to the second preset position in a movement direction of the battery cell.

In some embodiments, in the case that the battery cell is located at the first preset position, fixing the battery cell to the first preset position of the base by using the positioning mechanism further includes: controlling a second drive assembly to drive a second stop block to move, such that the battery cell is located between the first stop block and the second stop block.

In some embodiments, controlling the taping assembly to adsorb the adhesive tape from the placement platform and move from the placement platform to the first preset position to attach the adhesive tape to the battery cell includes: controlling a second slide rail to move along a track of a first slide rail, such that a taping element moves to the placement platform to adsorb the adhesive tape; controlling the second slide rail to move along the track of the first slide rail, such that the taping element moves to the battery cell; and controlling the taping element to move along a track of the second slide rail, such that the taping element moves toward the battery cell to attach the adhesive tape to the battery cell.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

In the drawings, unless otherwise specified, the same reference numerals across multiple drawings indicate the same or similar components or elements. The drawings are not necessarily drawn to scale. It should be understood that the drawings depict only some embodiments of the present application and are therefore not to be considered as limiting the scope of the present application. To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a taping apparatus according to some embodiments of the present application;
FIG. 2 is a front view of a taping apparatus according to some embodiments of the present application;
FIG. 3 is a top view of a taping apparatus according to some embodiments of the present application;
FIG. 4 is a right side view of a taping apparatus according to some embodiments of the present application;
FIG. 5 is a schematic structural diagram of a taping mechanism according to some embodiments of the present application;
FIG. 6 is a schematic structural diagram of a taping mechanism according to some embodiments of the present application from another perspective;
FIG. 7 is a front view of a taping mechanism according to some embodiments of the present application;
FIG. 8 is a schematic partial structural diagram of a taping assembly and a to-be-taped member according to some embodiments of the present application;
FIG. 9 is a schematic partial structural diagram of a first stop block and a to-be-taped member according to some embodiments of the present application;
FIG. 10 is a schematic partial structural diagram of a first stop block and a to-be-taped member according to some other embodiments of the present application;
FIG. 11 is a block diagram of a taping apparatus according to some other embodiments of the present application;
FIG. 12 is a partial bottom view of a taping assembly and a to-be-taped member according to some embodiments of the present application;
FIG. 13 is a schematic structural diagram of a taping apparatus according to some other embodiments of the present application;
FIG. 14 is a schematic structural diagram of a taping apparatus according to some other embodiments of the present application from another perspective;
FIG. 15 is a front view of a taping apparatus according to some other embodiments of the present application;
FIG. 16 is a top view of a taping apparatus according to some other embodiments of the present application; and
FIG. 17 is a flowchart of a method for taping a battery cell according to some embodiments of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

The battery includes a plurality of battery cells, and an adhesive tape is attached to the surfaces of the battery cells to facilitate the connection between the battery cells and other elements, thereby ensuring the integrity of the battery. In the related art, an operator usually applies a double-sided adhesive tape to the surfaces of the battery cells. However, such a taping method has relatively low efficiency and affects the production of the battery.

Embodiments of the present application provide a taping apparatus. The taping apparatus includes a base, a positioning mechanism, and a taping mechanism. The base is configured to place a to-be-taped member, and the positioning mechanism is configured to fix the to-be-taped member to a first preset position of the base. The taping mechanism includes a placement platform and a taping assembly. The placement platform is configured to place an adhesive tape, and the taping assembly is configured to adsorb the adhesive tape and move from the placement platform to the first preset position to attach the adhesive tape to the to-be-taped member. The taping apparatus can fix the to-be-taped member by means of the positioning mechanism, and then the taping assembly attaches the adhesive tape placed on the placement platform to the to-be-taped member on the base, so as to realize automatic taping of the to-be-taped member. The taping speed is relatively fast, and the taping efficiency is relatively high, thereby improving the production efficiency of the battery. In addition, automatic taping reduces human operations, thereby saving labor costs.

The taping apparatus disclosed in the embodiments of the present application can be configured to attach an adhesive tape to the battery cell, or can be configured to attach an adhesive tape to other elements. For example, the taping apparatus according to the embodiments of the present application can be configured to attach the adhesive tape to an end plate.

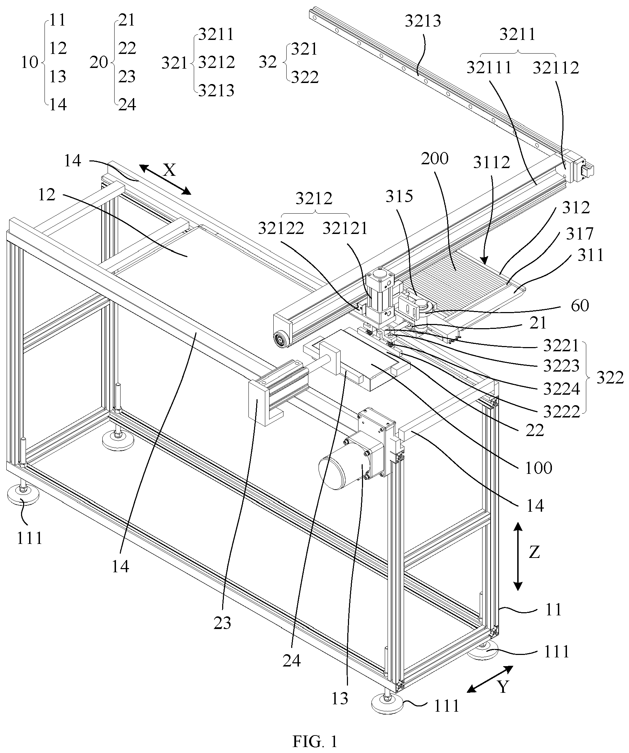

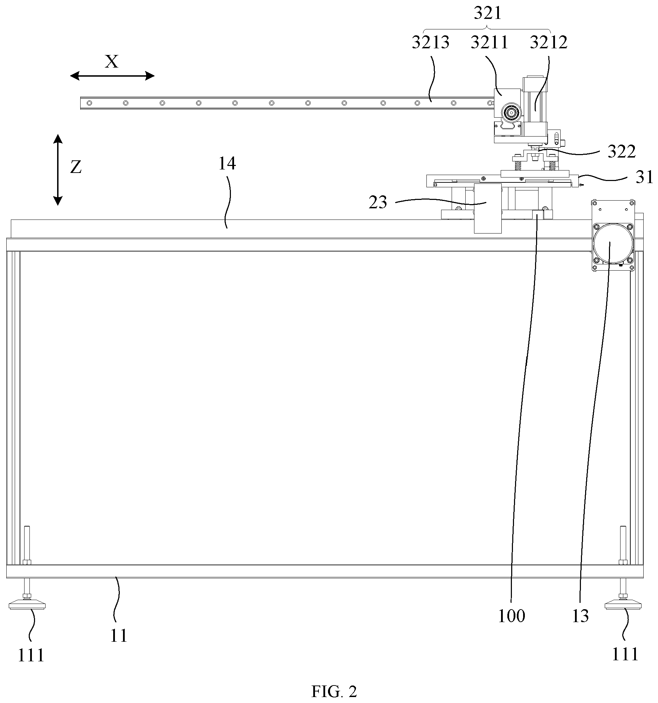

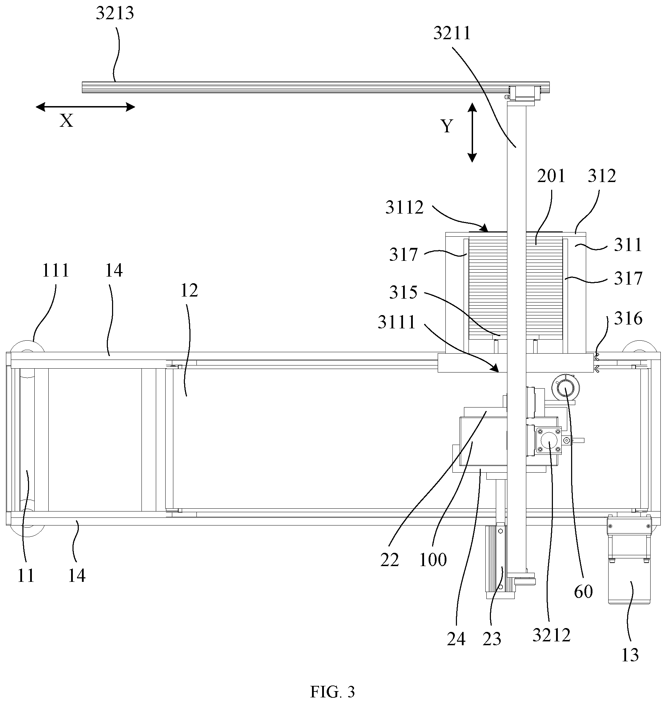

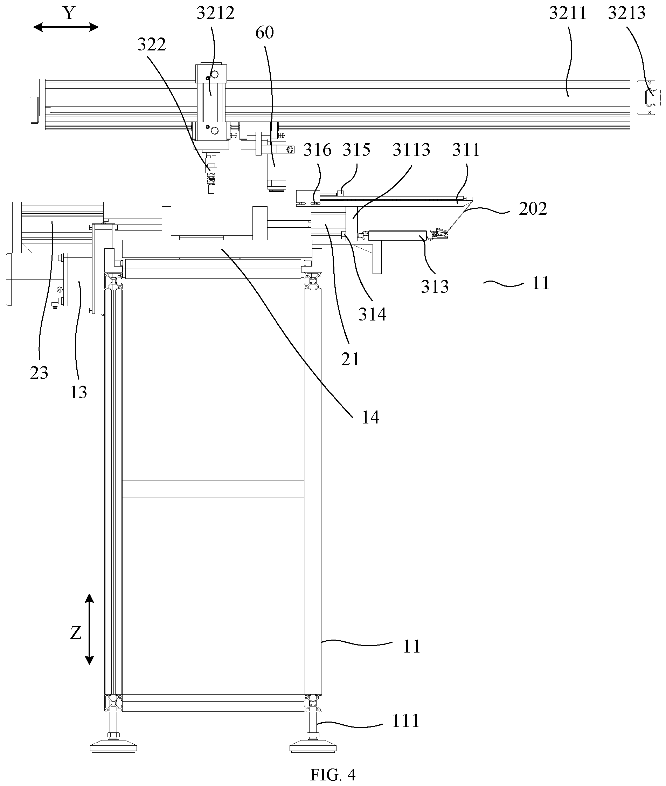

The embodiments of the present application provide a taping apparatus. FIG. 1 is a schematic structural diagram of a taping apparatus according to some embodiments of the present application. FIG. 2 is a front view of a taping apparatus according to some embodiments of the present application. FIG. 3 is a top view of a taping apparatus according to some embodiments of the present application. FIG. 4 is a right side view of a taping apparatus according to some embodiments of the present application. Referring to FIGs. 1 to 4, the taping apparatus includes a base 10, a positioning mechanism 20, and a taping mechanism 30. The base 10 is configured to place a to-be-taped member 100, and the positioning mechanism 20 is configured to fix the to-be-taped member 100 to a first preset position of the base 10.

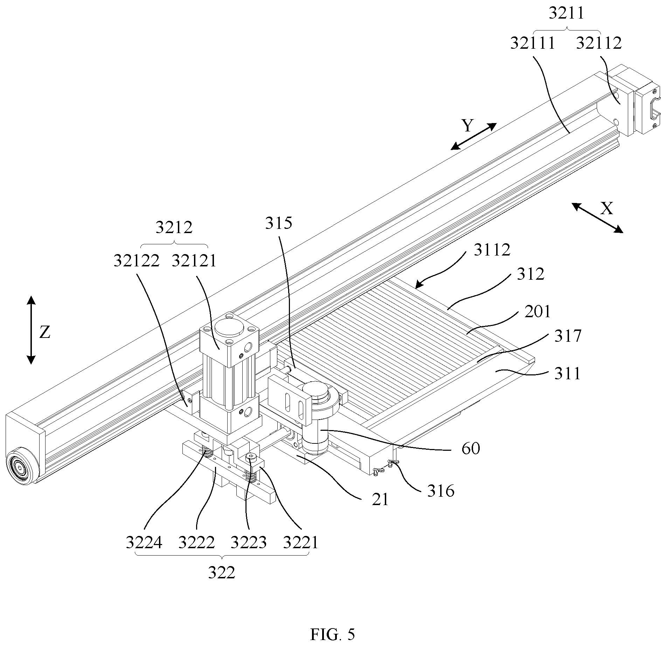

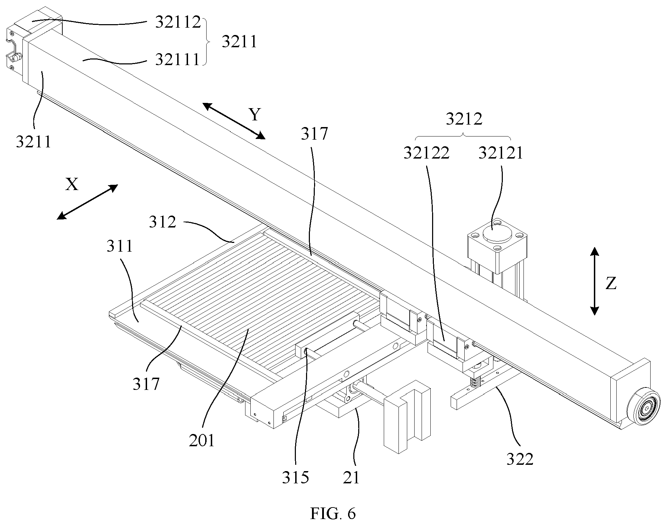

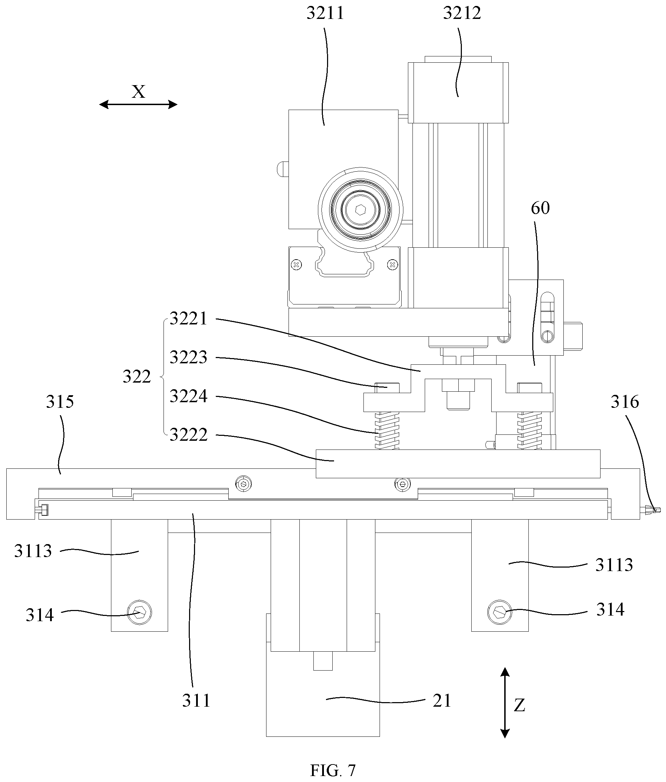

FIG. 5 is a schematic structural diagram of a taping mechanism according to some embodiments of the present application. FIG. 6 is a schematic structural diagram of a taping mechanism according to some embodiments of the present application from another perspective. FIG. 7 is a front view of a taping mechanism according to some embodiments of the present application. Referring to FIGs. 5 to 7, the taping mechanism 30 includes a placement platform 31 and a taping assembly 32. The placement platform 31 is configured to place an adhesive tape, and the taping assembly 32 is configured to adsorb the adhesive tape 200 and move from the placement platform 31 to the first preset position to attach the adhesive tape 200 to the to-be-taped member 100.

In the embodiments of the present application, the to-be-taped member 100 may be any element that requires taping. For example, the to-be-taped member 100 may be a battery cell. The type of the adhesive tape 200 is not limited. For example, the adhesive tape may be single-sided adhesive tape, double-sided adhesive tape, or latex. In order to facilitate the explanation of the taping apparatus according to the embodiments of the present application, the following description will take the to-be-taped member 100 being a battery cell and the adhesive tape 200 being a double-sided adhesive tape as an example. It can be understood that the to-be-taped member 100 and the adhesive tape 200 may also be of other types.

In the embodiments of the present application, the base 10 is configured to place the to-be-taped member 100 to provide support for the to-be-taped member 100, thereby facilitating subsequent taping of the to-be-taped member 100.

In the embodiments of the present application, the positioning mechanism 20 fixes the to-be-taped member 100, such that the to-be-taped member 100 is fixed to the first preset position of the base 10 during the taping process, thereby reducing the possibility that the movement of the to-be-taped member 100 affects the taping quality. Meanwhile, for different to-be-taped members 100, the to-be-taped members 100 may all be fixed at the same first preset position during the taping process, such that the taping assembly 32 of the taping mechanism 30 can attach an adhesive tape to the to-be-taped members 100 at the same position, thereby making the operation simpler.

In the embodiments of the present application, the first preset position is a position, on the base 10, where the to-be-taped member 100 is located during the taping of the to-be-taped member 100.

In the embodiments of the present application, the placement platform 31 is configured to place the adhesive tape 200 and provide a placement space for the adhesive tape 200. The taping assembly 32 may move, and the taping assembly 32 may move to the placement platform 31 and adsorb the adhesive tape 200 placed on the placement platform 31. The taping assembly 32 may also move to the first preset position and attach the adhesive tape 200 to the to-be-taped member 100.

In the taping apparatus according to the embodiments of the present application, the to-be-taped member 100 may be fixed by the positioning mechanism 20, and then the taping assembly 32 attaches the adhesive tape 200 placed on the placement platform 31 to the to-be-taped member 100 on the base 10, so as to realize automatic taping of the to-be-taped member 100. The taping speed is relatively fast, and the taping efficiency is relatively high, thereby improving the production efficiency of the battery. In addition, automatic taping reduces human operations, thereby saving labor costs.

According to some embodiments of the present application, referring to FIGs. 1 to 4, the base 10 includes a support 11, a conveying platform 12, and a power assembly 13. The conveying platform 12 is located on the support 11, and the conveying platform 12 is configured to place the to-be-taped member 100. The power assembly 13 is connected to the support 11, and the power assembly 13 is configured to drive the conveying platform 12 to move, such that the to-be-taped member 100 moves to the first preset position.

In the embodiments of the present application, the support 11 forms an integral frame of the base 10, the conveying platform 12 is located on the support 11, the support 11 provides support for the conveying platform 12, and meanwhile, the power assembly 13 is connected to the support 11 to ensure the stability of the power assembly 13.

In some embodiments of the present application, the shape of the support 11 may be set on the basis of requirements. Illustratively, the support 11 may be a rectangular frame.

In some embodiments of the present application, the conveying platform 12 may include a conveyor belt, or the conveying platform 12 may include a chain.

In the embodiments of the present application, the power assembly 13 may include a motor, or the power assembly 13 may include a cylinder.

Referring to FIGs. 1, 2, and 4, support legs 111 are arranged at the bottom of the support 11. The support legs 111 may adjust the height of the support 11, and meanwhile, the levelness of the base 10 may be adjusted by adjusting a part of the support legs 111.

In the embodiments of the present application, the power assembly 13 drives the conveying platform 12 to move, such that the to-be-taped member 100 can move to the first preset position. After the to-be-taped member 100 moves to the first preset position, the power assembly 13 is controlled to stop operating, such that the to-be-taped member 100 can move to the first preset position. In this way, the movement of the to-be-taped member 100 is controlled, which is more convenient.

According to some embodiments of the present application, referring to FIGs. 1 to 4, anti-falling barrier rods 14 are arranged at side edges of the surface, on which the conveying platform 12 is arranged, of the support 11.

In the embodiments of the present application, when the pick-and-place apparatus is in normal use, the anti-falling barrier rods 14 protrude from a conveying surface of the conveying platform 12, such that the anti-falling barrier rods 14 may prevent the to-be-taped member 100 from falling off the conveying surface of the conveying platform 12 to a certain extent.

In some embodiments of the present application, the surface, on which the conveying platform 12 is arranged, of the support 11 is rectangular, and the anti-falling barrier rods 14 may be arranged at four side edges of the rectangular surface; that is, the anti-falling barrier rods 14 may surround the surface of the support 11, such that the risk of falling of the to-be-taped member 100 can be reduced from multiple directions.

In the embodiments of the present application, the arrangement of the anti-falling barrier rods 14 can reduce the risk of falling of the to-be-taped member 100, and improve the safety of the to-be-taped member 100 during the taping process.

According to some embodiments of the present application, the positioning mechanism 20 is configured to block the movement of the to-be-taped member 100 to fix the to-be-taped member 100 at the first preset position.

In the embodiments of the present application, the positioning mechanism 20 may block the movement of the to-be-taped member 100. In this way, even if the to-be-taped member 100 moves to the first preset position, the power assembly 13 does not stop operating, and the to-be-taped member 100 may be fixed at the first preset position by the positioning mechanism 20, thereby achieving the positioning of the to-be-taped member 100.

According to some embodiments of the present application, the movement direction of the to-be-taped member 100 is a first direction X. Referring to FIGs. 1 and 3, the positioning mechanism 20 includes a first drive assembly 21 and a first stop block 22. The first drive assembly 21 is connected to the support 11, and the first stop block 22 is connected to the first drive assembly 21. The first drive assembly 21 is configured to drive the first stop block 22 to move, such that at least a part of the first stop block 22 is located at a second preset position to block the to-be-taped member 100. As a result, the to-be-taped member 100 is located at the first preset position, and the first preset position is adjacent to the second preset position in the first direction X.

In the embodiments of the present application, the conveying platform 12 conveys the to-be-taped member 100 to move, and the movement direction of the conveying platform 12 is the first direction X.

In the embodiments of the present application, the first preset position is adjacent to the second preset position in the first direction X, and the second preset position is located downstream of the movement path of the to-be-taped member 100.

In the embodiments of the present application, the first drive assembly 21 is connected to the support 11 to ensure the stability of the first drive assembly 21.

In the embodiments of the present application, the first drive assembly 21 may include a motor, or the first drive assembly 21 may include a cylinder.

In the embodiments of the present application, the first stop block 22 is connected to an output shaft of the first drive assembly 21, and the movement of the first stop block 22 may be controlled through the extension and retraction of the output shaft.

In the embodiments of the present application, during the taping process, the first drive assembly 21 drives the first stop block 22 to move to the second preset position. When the to-be-taped member 100 moves to the first preset position adjacent to the second preset position, the first stop block 22 may block the movement of the to-be-taped member 100, and the to-be-taped member 100 does not continue to move under the action of inertia, thereby improving the accuracy of the positioning mechanism 20 in positioning the to-be-taped member 100.

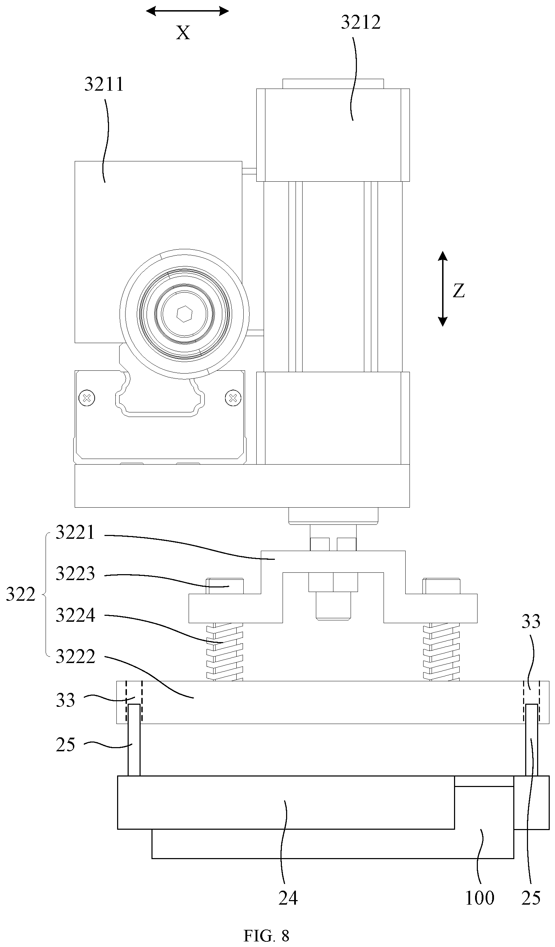

According to some embodiments of the present application, FIG. 8 is a schematic partial structural diagram of a taping assembly and a to-be-taped member according to some embodiments of the present application. Referring to FIG. 8, positioning holes 33 are formed in one of the surface, facing the first stop block 22, of the taping assembly 32 and the surface, facing the taping assembly 32, of the first stop block 22, and positioning pins 25 are arranged on the other of the surface, facing the first stop block 22, of the taping assembly 32 and the surface, facing the taping assembly 32, of the first stop block 22. During the process of taping of the to-be-taped member 100 by the taping assembly 32, the positioning pins 25 are located in the positioning holes 33.

In some embodiments of the present application, referring to FIG. 8, the positioning holes 33 are formed in the surface, facing the first stop block 22, of the taping assembly 32, and the positioning pins 25 are arranged on the surface, facing the taping assembly 32, of the first stop block 22. In other embodiments of the present application, the positioning pins may be arranged on the surface, facing the first stop block 22, of the taping assembly 32, and the positioning holes may be formed in the surface, facing the taping assembly 32, of the first stop block 22.

In the embodiments of the present application, during the process of taping of the to-be-taped member 100 by the taping assembly 32, the positioning pins 25 being located in the positioning holes 33 may be characterized in that during the entire process of taping of the to-be-taped member 100 by the taping assembly 32, there is at least one time period during which the positioning pins 25 are located in the positioning holes 33.

In the embodiments of the present application, the positioning pins 25 and the positioning holes 33 are provided. The positioning pins 25 are located in the positioning holes 33 during taping. During each taping process, the relative position between the taping assembly 32 and the first stop block 22 remains unchanged. Since the relative position between the first stop block 22 and the to-be-taped member 100 is fixed, the relative position between the taping assembly 32 and the to-be-taped member 100 remains unchanged. For battery cells of the same model, the shapes of the battery cells are the same, such that the taping assembly 32 can attach an adhesive tape to the same position on the battery cells during the taping process. The accuracy of taping of the battery cells is higher, and the taping effect is better.

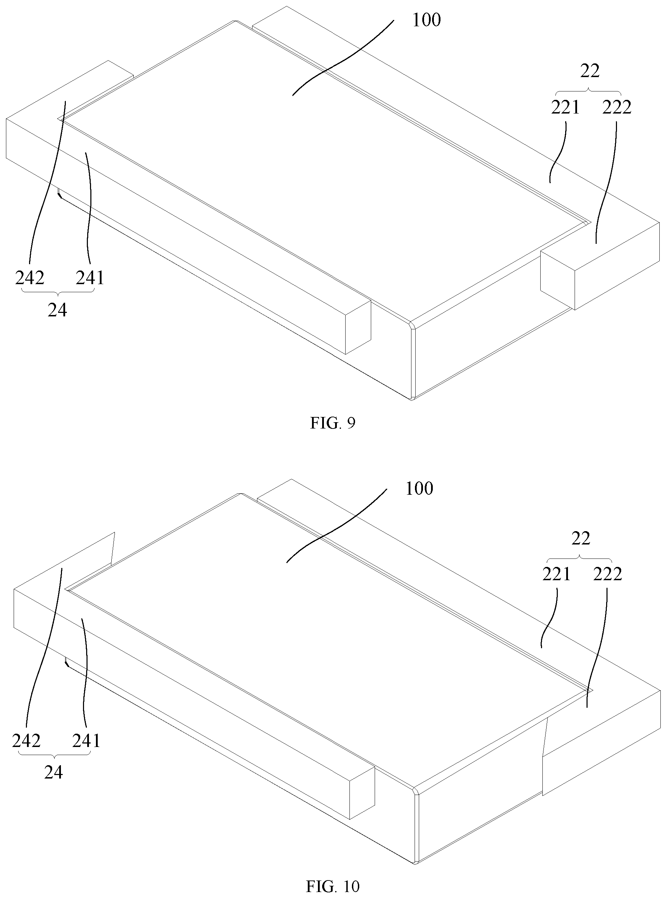

According to some embodiments of the present application, FIG. 9 is a schematic partial structural diagram of a first stop block and a to-be-taped member according to some embodiments of the present application. Referring to FIGs. 1, 6, and 9, the first stop block 22 includes a first stop rod 221 and a second stop rod 222. The first stop rod 221 is connected to the first drive assembly 21, the second stop rod 222 is connected to the first stop rod 221, and the first stop rod 221 intersects with the second stop rod 222. In the case that the to-be-taped member 100 is located at the first preset position, the first stop rod 221 and the second stop rod 222 are respectively fitted to two adjacent side edges of the to-be-taped member 100.

In the embodiments of the present application, the extension direction of the first stop rod 221 and the extension direction of the second stop rod 222 may be determined based on the shape of the to-be-taped member 100. For example, the to-be-taped member 100 is a battery cell, and two adjacent side edges of the battery cell are perpendicular to each other, so the extension direction of the first stop rod 221 and the extension direction of the second stop rod 222 are perpendicular to each other.

FIG. 10 is a schematic partial structural diagram of a first stop block and a to-be-taped member according to some other embodiments of the present application. Referring to FIG. 10, a chamfer may be arranged at an end, away from the first stop rod 221, of the second stop rod 222, and the opening formed by the first stop rod 221 and the second stop rod 222 is larger, such that the to-be-taped member 100 is easier to enter the space enclosed by the first stop rod 221 and the second stop rod 222.

In the embodiments of the present application, the first stop block 22 includes a first stop rod 221 and a second stop rod 222, and the first stop rod 221 and the second stop rod 222 are fitted to two adjacent side edges of the to-be-taped member 100, respectively, such that the contact area between the first stop block 22 and the to-be-taped member 100 is larger, and the positioning effect of the positioning mechanism 20 on the to-be-taped member 100 is better. Meanwhile, when the to-be-taped member 100 moves toward the first stop rod 221, the first stop rod 221 may block the movement of the to-be-taped member 100, or when the to-be-taped member 100 moves toward the second stop rod 222, the second stop rod 222 may block the movement of the to-be-taped member 100, which can better fix the to-be-taped member 100 and improve the subsequent taping effect.

According to some embodiments of the present application, referring to FIGs. 1 and 4 to 7, the positioning mechanism 20 further includes a second drive assembly 23 and a second stop block 24. The second drive assembly 23 is connected to the support 11, and the second drive assembly 23 and the first drive assembly 21 are located on two opposite sides of the support 11 disposed in a second direction Y, the second direction Y intersecting with the first direction X. The second stop block 24 is connected to the second drive assembly 23. The second drive assembly 23 is configured to drive the second stop block 24 to move, such that in the case that the to-be-taped member 100 is located at the first preset position, the to-be-taped member 100 is located between the first stop block 22 and the second stop block 24.

In the embodiments of the present application, when the to-be-taped member 100 is a battery cell, the second direction Y may be perpendicular to the first direction X. In other implementations, the included angle between the second direction Y and the first direction X is less than 90 degrees.

In the embodiments of the present application, the second drive assembly 23 is connected to the support 11 to ensure the stability of the second drive assembly 23.

In the embodiments of the present application, the second drive assembly 23 may include a motor, or the second drive assembly 23 may include a cylinder.

In the embodiments of the present application, the second stop block 24 is connected to an output shaft of the second drive assembly 23, and the movement of the second stop block 24 may be controlled through the extension and retraction of the output shaft.

In the embodiments of the present application, in the first direction X, the to-be-taped member 100 is located between the first stop block 22 and the second stop block 24.

In the embodiments of the present application, a controller 50 may be in communication connection with both the first drive assembly 21 and the second drive assembly 23, and the controller 50 may control the first drive assembly 21 and the second drive assembly 23 to operate or stop operating.

In the embodiments of the present application, when the to-be-taped member 100 is located at the first preset position, the to-be-taped member 100 is located between the first stop block 22 and the second stop block 24, such that two opposite sides of the to-be-taped member 100 are both blocked, thereby achieving a better positioning effect on the to-be-taped member 100, reducing the possibility of movement of the to-be-taped member 100, and improving the subsequent taping effect.

According to some embodiments of the present application, referring to FIGs. 9 and 10, the second stop block 24 includes a third stop rod 241 and a fourth stop rod 242. The third stop rod 241 is connected to the second drive assembly 23, the fourth stop rod 242 is connected to the third stop rod 241, and the third stop rod 241 intersects with the fourth stop rod 242. In the case that the to-be-taped member 100 is located at the first preset position, the third stop rod 241 and the fourth stop rod 242 are respectively fitted to two adjacent side edges of the to-be-taped member 100. The third stop rod 241 is opposite to the first stop rod 221, and the fourth stop rod 242 is opposite to the second stop rod 222.

In some embodiments of the present application, the extension direction of the first stop rod 221 may be the same as the extension direction of the third stop rod 241, and the extension direction of the first stop rod 221 may be parallel to the first direction X; the extension direction of the second stop rod 222 may be the same as the extension direction of the fourth stop rod 242, and the extension direction of the second stop rod 222 may be parallel to the second direction Y; the first direction X is perpendicular to the second direction Y.

Referring to FIG. 10, a chamfer may be arranged at an end, away from the third stop rod 241, of the fourth stop rod 242, and the opening formed by the third stop rod 241 and the fourth stop rod 242 is larger, such that the to-be-taped member 100 is easier to enter the space enclosed by the third stop rod 241 and the fourth stop rod 242.

In the embodiments of the present application, the first stop rod 221, the second stop rod 222, the third stop rod 241, and the fourth stop rod 242 form a structure similar to a box, and the battery cell is located in the box; that is, the movement of the battery cell is limited from four directions, which can better fix the to-be-taped member 100 and improve the subsequent taping effect.

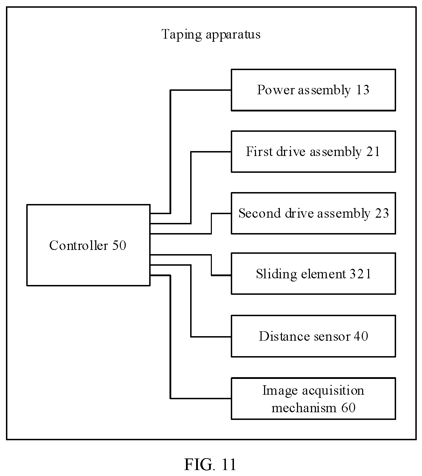

According to some embodiments of the present application, FIG. 11 is a block diagram of a taping apparatus according to some other embodiments of the present application. Referring to FIG. 11, the taping apparatus further includes a distance sensor 40 and a controller 50. The distance sensor 40 is located on the support 11, and the distance sensor 40 is configured to detect a distance between the distance sensor 40 and the to-be-taped member 100. The controller 50 is in communication connection with both the distance sensor 40 and the power assembly 13. The distance sensor 40 is further configured to send the distance between the distance sensor 40 and the to-be-taped member 100 to the controller 50, and the controller 50 is configured to control the power assembly 13 to stop operating on the basis that the distance between the distance sensor 40 and the to-be-taped member 100 is less than or equal to a preset distance value.

In the embodiments of the present application, the distance sensor 40 is located on the support 11 to ensure the stability of the distance sensor 40. The distance sensor 40 may be arranged downstream of the movement direction of the to-be-taped member 100, such that during the movement of the to-be-taped member 100, the distance between the distance sensor 40 and the to-be-taped member 100 detected by the distance sensor 40 gradually decreases.

In the embodiment of the present application, the preset distance value may be a distance between the first preset position and the distance sensor 40. When the distance between the distance sensor 40 and the to-be-taped member 100 is equal to the preset distance value, it indicates that the to-be-taped member 100 has moved to the first preset position. In this case, the power assembly 13 is controlled to stop operating, and the to-be-taped member 100 does not continue to move, thereby improving the positioning of the to-be-taped member 100. When the distance between the distance sensor 40 and the to-be-taped member 100 is less than the preset distance value, it indicates that the position of the to-be-taped member 100 has exceeded the first preset position. In this case, the power assembly 13 is controlled to stop operating, and the position of the to-be-taped member 100 is finely adjusted through the first stop rod 221 and the second stop rod 222, thereby achieving the positioning of the to-be-taped member 100.

In the embodiments of the present application, the preset distance value may be set on the basis of requirements. Illustratively, the preset distance value may be 200 mm.

In the embodiments of the present application, the controller 50 may be in communication connection with the power assembly 13, and the controller 50 may control the power assembly 13 to operate or stop operating.

In the embodiments of the present application, the distance between the distance sensor 40 and the to-be-taped member 100 is detected by the distance sensor 40, and the controller 50 controls the operation of the power assembly 13 on the basis of the distance between the distance sensor 40 and the to-be-taped member 100, such that the position of the to-be-taped member 100 is automatically controlled, and thus labor costs are reduced, and the taping apparatus is more automated.

According to some embodiments of the present application, referring to FIGs. 1, 5, and 6, the placement platform 31 includes a support plate 311. The support plate 311 is provided with a first end 3111 and a second end 3112 opposite to each other. The adhesive tape includes a plurality of adhesive strips 201 disposed side by side, the arrangement direction of the plurality of adhesive strips 201 is the same as the arrangement direction of the first end 3111 and the second end 3112, the plurality of adhesive strips 201 are located between the first end 3111 and the second end 3112, and the distance between the adhesive strip 201, close to the second end 3112, of the plurality of adhesive strips 201 and the second end 3112 remains constant.

In some embodiments of the present application, the first end 3111 and the second end 3112 may be disposed in the second direction Y; that is, the plurality of adhesive strips 201 are disposed in the second direction Y, and the adhesive strips 201 extend in the first direction X, such that the adhesive tape can be attached to the side edges of the battery cell extending in the first direction X.

In some other embodiments of the present application, the first end 3111 and the second end 3112 may be disposed in the first direction X; that is, the plurality of adhesive strips 201 are disposed in the first direction X, and the adhesive strips 201 extend in the second direction Y, such that the adhesive tape can be attached to the side edges of the battery cell extending in the second direction Y.

In the embodiments of the present application, for each taping, the taping assembly 32 may adsorb one adhesive strip 201 of the plurality of adhesive strips 201 to be attached to the battery cell. After the taping is completed, the remaining adhesive strips 201 may move toward the second end 3112, such that the distance between the adhesive strip 201, close to the second end 3112, of the plurality of adhesive strips 201 and the second end 3112 remains constant.

In the embodiments of the present application, the adhesive strips 201 are placed on the support plate 311 to provide a placement space for the adhesive strips 201. Meanwhile, the distance between the adhesive strip 201, close to the second end 3112, of the plurality of adhesive strips 201 and the second end 3112 remains constant; that is, taping is performed multiple times. The relative positions of the adhesive strips 201, close to the second end 3112, of the plurality of adhesive strips 201 and the second end 3112 are fixed, and the taping assembly 32 can adsorb the adhesive strip 201 of the second end 3112 all the time during the process of adsorbing the adhesive strips 201. In this way, the trajectory of each movement of the taping assembly 32 is the same, and it is simpler to control the movement of the taping assembly 32.

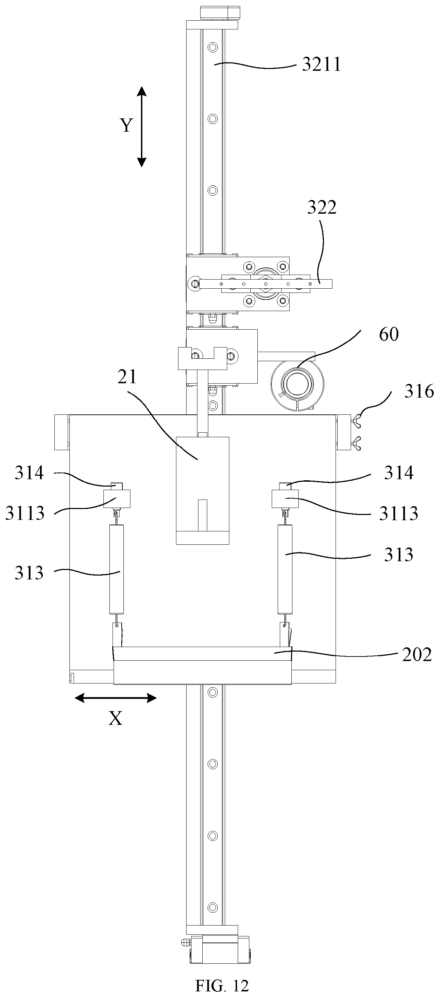

According to some embodiments of the present application, FIG. 12 is a partial bottom view of a taping assembly and a to-be-taped member according to some embodiments of the present application. Referring to FIG. 12, the placement platform 31 further includes a stop strip 312 and first elastic elements 313. The stop strip 312 and the adhesive strips 201 are located on the same side of the support plate 311, the stop strip 312 is close to the second end 3112, the plurality of adhesive strips 201 are located between the first end 3111 and the stop strip 312, the adhesive strip 201, close to the stop strip 312, of the plurality of adhesive strips 201 abuts against the stop strip 312, the first elastic elements 313 are located on a side, facing away from the stop strip 312, of the support plate 311, and the first elastic elements 313 are connected to the support plate 311. The adhesive tape further includes a release paper 202, the plurality of adhesive strips 201 are all located on the release paper 202, a portion, on which the adhesive strips 201 are arranged, of the release paper 202 is fitted to a plate surface of the support plate 311, and the other portion of the release paper 202 passes through the second end 3112 to be connected to the first elastic elements 313.

In the embodiments of the present application, the side edge of the stop strip 312 may be connected to the side edge of the support plate 311, and a gap is formed between the middle of the stop strip 312 and the middle of the support plate 311, such that the release paper 202 passes through the gap between the stop strip 312 and the support plate 311 and then passes through the second end 3112 to be connected to the first elastic elements 313.

In an implementation of the present application, the first elastic element 313 may be a spring, and a hook is arranged at an end, connected to the release paper 202, of the spring, to facilitate a connection between the spring and the release paper 202.

In the embodiments of the present application, the first elastic element 313 has an elastic force, the other portion of the release paper 202 is connected to the first elastic elements 313, and the first elastic elements 313 may pull the release paper 202 to move toward the second end 3112, such that the release paper 202 is in a flat state all the time, and it is convenient to adsorb the adhesive strips on the release paper 202. At the same time, the adhesive strips 201 on the release paper 202 may move along with the release paper 202, such that the adhesive strip 201 close to the stop strip 312 abuts against the stop strip 312. At the same time, the abutting of the adhesive strip 201 against the stop strip 312 limits the movement of the adhesive strip 201, thereby limiting the movement of the release paper 202.

In the embodiments of the present application, after the taping assembly 32 adsorbs the adhesive strip 201, a gap is formed between the adhesive strip 201 and the stop strip 312. In this case, the stop strip 312 cannot limit the movement of the adhesive strip 201. Under the elastic force of the first elastic element 313, the release paper 202 moves toward the second end 3112, and the adhesive strip 201 on the release paper 202 moves along with the release paper 202, such that the adhesive strip 201 close to the stop strip 312 abuts against the stop strip 312. The distance between the stop strip 312 and the second end 3112 is fixed, such that the distance between the adhesive strip 201 close to the second end 3112 and the second end 3112 is fixed, and the adhesive strip 201 does not need to be manually controlled to move, thereby reducing labor costs and implementing automated taping.

After the taping is completed, the release paper 202 can be directly recycled from the first elastic elements 313, which is convenient and rapid.

According to some embodiments of the present application, referring to FIG. 12, the first elastic elements 313 are connected to the support plate 311 through first adjusting bolts 314, and the first adjusting bolts 314 are configured to adjust the distances between the first elastic elements 313 and the second end 3112.

Illustratively, mounting protrusions 3113 may be arranged on a surface of the support plate 311 on a side facing away from the stop strip 312, and the first adjusting bolts 314 are connected to the mounting protrusions 3113, such that the first adjusting bolts 314 are connected to the support plate 311.

Illustratively, a mounting hole is formed in one end, connected to the first elastic element 313, of the first adjusting bolt 314, a hook is arranged at one end, connected to the first adjusting bolt 314, of the first elastic element 313, and the hook extends into the mounting hole to achieve a connection between the first adjusting bolt 314 and the first elastic element 313.

In the embodiments of the present application, the distance between the first adjusting bolt 314 and the second end 3112 can be adjusted by screwing the first adjusting bolt 314, thereby adjusting the distance between the first elastic element 313 and the second end 3112.

In the embodiments of the present application, the first elastic elements 313 pull the release paper 202 to move by an elastic force. As the number of taping times increases, the release paper 202 moves toward the first elastic elements 313, and the first elastic elements 313 gradually recover from the deformation. When the first elastic elements 313 return to an inelastic state, the first elastic elements 313 can no longer provide the elastic force to pull the release paper 202 to move. In this case, the distance between the first elastic element 313 and the second end 3112 can be adjusted by screwing the first adjusting bolt 314, such that the distance between the first elastic element 313 and the second end 3112 increases. In this case, the release paper 202 may pull the first elastic element 313, and the first elastic element 313 may generate an elastic force again, such that the first elastic element 313 can pull the release paper 202 to move by the elastic force.

According to some embodiments of the present application, referring to FIGs. 5 and 6, the placement platform 31 further includes second elastic elements 315. The second elastic elements 315 and the adhesive strips 201 are located on the same side of the support plate 311. The second elastic elements 315 are connected to the support plate 311, and the second elastic elements 315 abut against an end, away from the second end 3112, of the adhesive strip 201.

In an implementation of the present application, the second elastic element 315 includes a spring and a push rod. Two ends of the spring abut against the first end 3111 and the adhesive strip 201, respectively. The spring pushes the push rod such that the push rod abuts against the adhesive strip 201.

In the embodiments of the present application, the second elastic element 315 has an elastic force to push the adhesive strip 201 to move toward the second end 3112, such that the distance between the adhesive strip 201, close to the second end 3112, of the plurality of adhesive strips 201 and the second end 3112 remains constant.

According to some embodiments of the present application, the second elastic elements 315 are movably connected to the support plate 311 through second adjusting bolts 316, and the second adjusting bolts 316 are configured to adjust the distances between the second elastic elements 315 and the second end 3112.

In some embodiments of the present application, the second elastic element 315 may be placed on the support plate 311, and the second elastic element 315 is provided with a threaded hole. From a side, away from the support plate 311, of the second elastic element 315, the second adjusting bolt 316 is in threaded connection to the threaded hole and then passes through the threaded hole to abut against the support plate 311, and the second elastic element 315 and the support plate 311 are connected through the friction force between the second adjusting bolt 316 and the support plate 311. When the distances between the second elastic elements 315 and the second end 3112 need to be adjusted, the second adjusting bolts 316 are screwed, such that the second adjusting bolts 316 do not abut against the support plate 311. After the second elastic elements 315 move to the required positions, the second adjusting bolts 316 are screwed in a reverse direction again, such that the second adjusting bolts 316 abut against the support plate 311, and the second elastic elements 315 and the support plate 311 are connected again.

In some other embodiments of the present application, the second elastic elements 315 are provided with through holes, and a plurality of threaded holes are formed in corresponding positions of the support plate 311. The second adjusting bolts 316 pass through the through holes and are in threaded connection to the threaded holes, such that the second elastic elements 315 are connected to the support plate 311. When the distances between the second elastic elements 315 and the second end 3112 need to be adjusted, the second adjusting bolts 316 are screwed, such that the second elastic elements 315 are not connected to the support plate 311. After the second elastic elements 315 move to the required positions, the second adjusting bolts 316 are used to pass through the through holes to be in threaded connection to the threaded holes, such that the second elastic elements 315 and the support plate 311 are connected again.

In the embodiments of the present application, the second elastic elements 315 push the adhesive strip 201 by an elastic force. As the number of taping times increases, the adhesive strip 201 moves toward the second end 3112, and the second elastic elements 315 gradually recover from the deformation. When the second elastic elements 315 return to an inelastic state, the second elastic elements 315 may not be able to push the adhesive strip 201 to move. In this case, the distances between the second elastic elements 315 and the second end 3112 can be adjusted by screwing the second adjusting bolts 316, so as to increase the deformation of the second elastic elements 315 and the elastic force provided by the second elastic elements 315, such that the second elastic elements 315 can push the adhesive strip 201 to move.

According to some embodiments of the present application, referring to FIG. 6, the placement platform 31 further includes limiting strips 317. The limiting strips 317 are located on the support plate 311, and the limiting strips 317 are located on two opposite sides of the adhesive strips 201 in the length direction.

In the embodiments of the present application, the extension direction of the limiting strips 317 is perpendicular to the extension direction of the adhesive strips 201.

In the embodiments of the present application, the limiting strips 317 can limit the movement of the adhesive strips 201 along the extension direction thereof, thereby reducing the movement of the adhesive strips 201 and improving the subsequent taping effect.

In some implementations of the present application, the limiting strips 317 may move in the extension direction of the adhesive strips 201, such that the limiting strips 317 can match adhesive strips 201 of different sizes.

According to some embodiments of the present application, referring to FIGs. 1 to 8, the taping assembly 32 includes a sliding element 321 and a taping element 322. The sliding element 321 includes a first slide rail 3211 and a second slide rail 3212. The second slide rail 3212 is connected to the first slide rail 3211, and the second slide rail 3212 may move along the track of the first slide rail 3211. The track of the first slide rail 3211 is parallel to the arrangement direction of the placement platform 31 and the first preset position, and the track of the second slide rail 3212 is perpendicular to a to-be-taped surface of the to-be-taped member 100. The taping element 322 is connected to the second slide rail 3212, and the taping element 322 may move along the track of the second slide rail 3212.

In the embodiments of the present application, the arrangement direction of the placement platform 31 and the first preset position may be parallel to the second direction Y; that is, the track of the first slide rail 3211 extends in the second direction Y. Referring to FIGs. 5 and 6, the first slide rail 3211 includes a first rail 32111, the first rail 32111 extending in the second direction Y.

In the embodiments of the present application, a third direction Z is perpendicular to the to-be-taped surface of the to-be-taped member 100, and every two of the first direction X, the second direction Y, and the third direction Z are perpendicular to each other. That is, the track of the second slide rail 3212 extends in the third direction Z.

In some embodiments of the present application, controlling the second slide rail 3212 to move along the track of the first slide rail 3211 can enable the taping element 322 to move in the second direction Y; and controlling the taping element 322 to move along the track of the second slide rail 3212 can enable the taping element 322 to move in the third direction Z. The taping element 322, when moving in the second direction Y, may move to the placement platform 31 and adsorb the adhesive tape 200 on the placement platform 31, and meanwhile, can convey the adhesive tape 200 on the placement platform 31 to the first preset position; the taping element 322, when moving in the third direction Z, attaches the adhesive tape to the battery cell.

In some embodiments of the present application, the positioning holes 33 may be located on the taping element 322.

In the embodiments of the present application, the controller 50 may be in communication connection with the sliding element 321, and the controller 50 may control the sliding element 321 to operate or stop operating.

In the embodiments of the present application, by arranging the first slide rail 3211 and the second slide rail 3212, the taping element 322 may move in at least two directions. The taping element 322 can adsorb the adhesive tape 200 on the placement platform 31, and meanwhile, can convey the adhesive tape 200 on the placement platform 31 to the first preset position and attach the adhesive tape to the battery cell.

In some embodiments of the present application, referring to FIGs. 1 to 4, the sliding element 321 further includes a third slide rail 3213. The track of the third slide rail 3213 extends in the first direction X, the first slide rail 3211 is connected to the third slide rail 3213, and the first slide rail 3211 may move along the track of the third slide rail 3213. The first slide rail 3211 is controlled to move along the track of the third slide rail 3213, such that the taping element 322 can move in the first direction X; the second slide rail 3212 is controlled to move along the track of the first slide rail 3211, such that the taping element 322 can move in the second direction Y; and the taping element 322 is controlled to move along the track of the second slide rail 3212, such that the taping element 322 can move in the third direction Z. That is, the taping element 322 can move in three different directions.

In some embodiments of the present application, referring to FIGs. 5 and 6, the first slide rail 3211 further includes a first sliding base 32112, and the first rail 32111 is connected to the first sliding base 32112. Referring to FIGs. 1 to 6, the first sliding base 32112 is connected to the track of the third slide rail 3213, and the first sliding base 32112 may move along the track of the third slide rail 3213. The second slide rail 3212 includes a mounting base 32121 and a second sliding base 32122. The second sliding base 32122 is connected to the first rail 32111, and the second sliding base 32122 may move along the first rail 32111. The second sliding base 32122 is provided with a second rail. The mounting base 32121 is connected to the second rail, and the mounting base 32121 may move along the second rail. The taping element 322 is connected to the mounting base 32121.

In the embodiments of the present application, the taping apparatus may include a fixed frame, and the third slide rail 3213 may be fixed on the fixed frame to ensure the stability of the third slide rail 3213. In the drawings of the embodiments of the present application, the fixed frame is omitted for clarity of the internal structure thereof.

According to some embodiments of the present application, referring to FIG. 8, the taping element 322 includes a connecting member 3221, a taping plate 3222, connecting rods 3223, and buffer springs 3224. The connecting member 3221 is connected to the second slide rail 3212, and the taping plate 3222 is located on a side, facing the to-be-taped member 100, of the connecting member 3221. Two ends of the connecting rods 3223 are connected to the connecting member 3221 and the taping plate 3222, respectively. The buffer springs 3224 sleeve the connecting rods 3223, and two ends of the buffer springs 3224 abut against the taping plate 3222 and the connecting member 3221, respectively.

In the embodiments of the present application, the taping plate 3222 is configured to adsorb the adhesive tape 200 and attach the adhesive tape to the battery cell, and the connecting rods 3223 are configured to connect the taping plate 3222 and the connecting member 3221. Meanwhile, the connecting rods 3223 are configured to place the buffer springs 3224, and the connecting member 3221 is configured to connect the taping plate 3222 and the second slide rail 3212, such that the taping plate 3222 can move.

In the embodiments of the present application, when the taping plate 3222 attaches the adhesive tape to the battery cell, the taping plate 3222 moves in the third direction Z and applies pressure to the battery cell, such that the adhesive tape is attached to the battery cell. The arrangement of the buffer springs 3224 may form a buffer when the taping plate 3222 applies pressure to the battery cell, reduce the pressure applied by the taping plate 3222 to the battery cell, and reduce the possibility of damage to the battery cell caused by excessive pressure.

According to some embodiments of the present application, referring to FIGs. 1, 5, and 6, the taping apparatus further includes an image acquisition mechanism 60, the image acquisition mechanism 60 being configured to acquire an image of the to-be-taped member 100 after taping.

In the embodiments of the present application, the image acquisition mechanism 60 may be in communication connection with the controller 50, the image acquisition mechanism 60 sends the acquired image of the to-be-taped member 100 after taping to the controller 50, and the controller 50 may determine the taping quality on the basis of the image and also determine whether a missed taping defect occurs on the basis of the image.

In the embodiments of the present application, the image acquisition mechanism 60 may be connected to the first slide rail 3211 through the second sliding base 32122, and the image acquisition mechanism 60 is movable to provide clearance for the taping element 322 during taping, thereby reducing the impact on the taping.

In some embodiments of the present application, the image acquisition mechanism 60 may be a ray collector, or the image acquisition mechanism 60 may be a charge-coupled device (CCD) camera.

In the embodiments of the present application, the image acquisition mechanism 60 acquires the image of the to-be-taped member 100 after taping, and the taping quality can be determined based on the image, thereby facilitating real-time knowledge of the taping quality by an operator without affecting the taping process to a certain extent.

The embodiments of the present application further provide a battery cell taping device. The taping device includes the taping apparatus according to any one of the above embodiments, and the taping apparatus is configured to attach an adhesive tape to the battery cell.

According to the battery cell taping device in the embodiments of the present application, automatic taping of the battery cell can be implemented, such that the taping speed is relatively high, and the taping efficiency is relatively high, thereby improving the production efficiency of a battery. In addition, automatic taping reduces human operations, thereby saving labor costs.

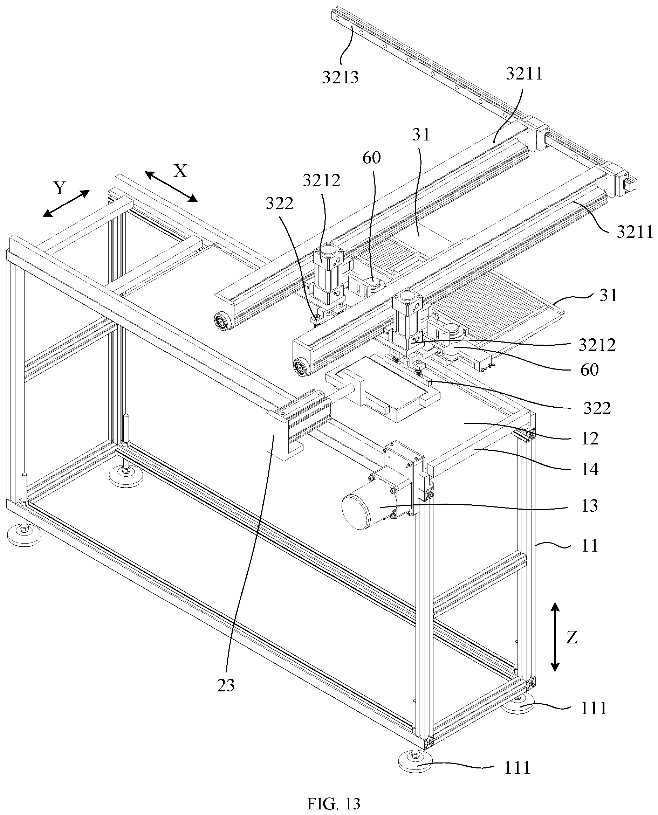

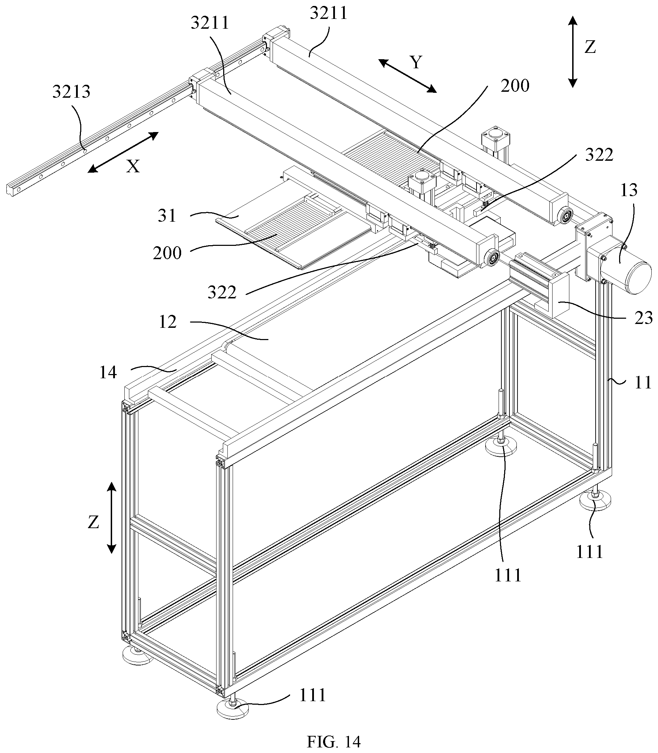

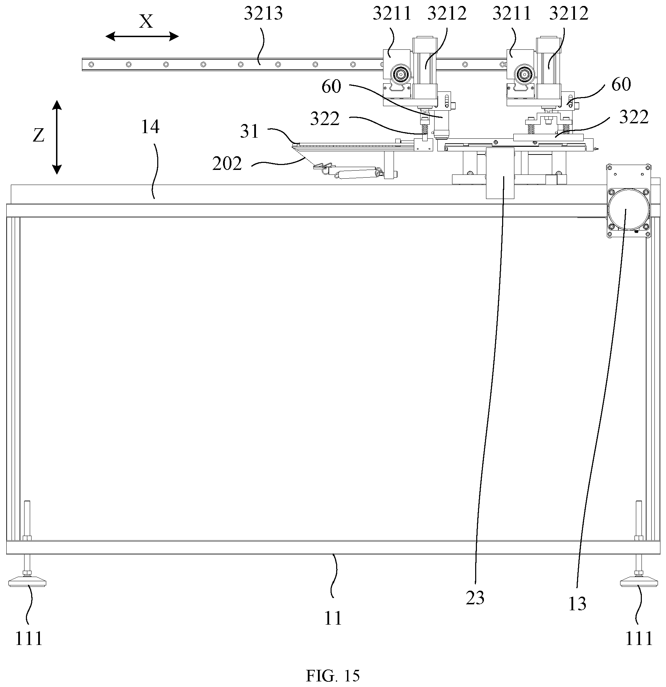

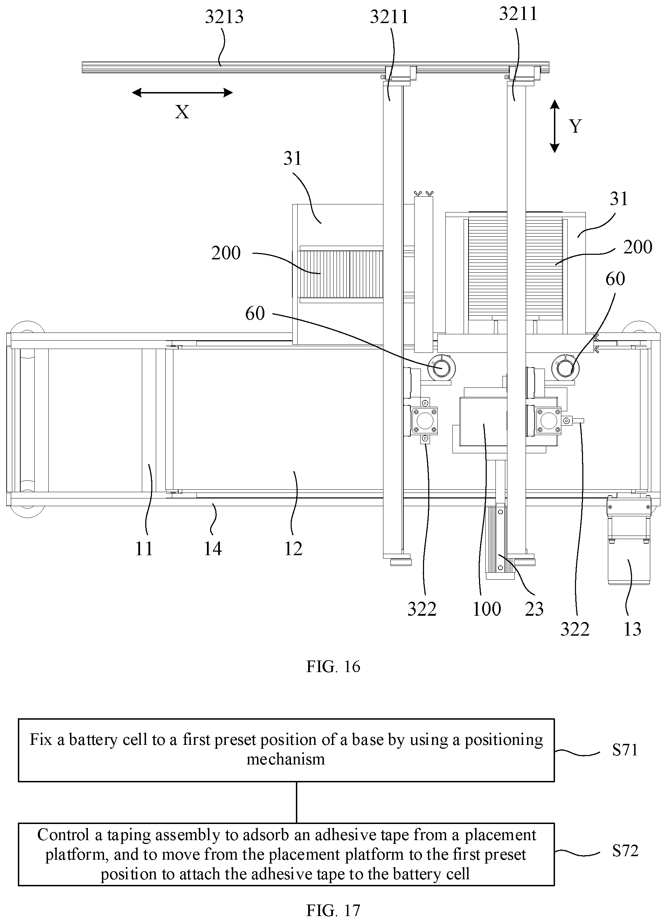

According to some embodiments of the present application, the battery cell includes a prismatic battery cell. FIG. 13 is a schematic structural diagram of a taping apparatus according to some other embodiments of the present application. FIG. 14 is a schematic structural diagram of a taping apparatus according to some other embodiments of the present application from another perspective. FIG. 15 is a front view of a taping apparatus according to some other embodiments of the present application. FIG. 16 is a top view of a taping apparatus according to some other embodiments of the present application. Referring to FIGs. 13 to 16, the taping apparatus includes two taping mechanisms 30. One taping mechanism 30 of the two taping mechanisms 30 is configured to attach an adhesive tape to two opposite side edges of the prismatic battery cell, and the other taping mechanism 30 of the two taping mechanisms 30 is configured to attach the adhesive tape to the other two opposite side edges of the prismatic battery cell.

In some embodiments of the present application, referring to FIGs. 13 to 16, the two taping mechanisms 30 may be located on the same side of the support 11. In other embodiments of the present application, the two taping mechanisms 30 may be located on two opposite sides of the support 11.

In some embodiments of the present application, the two taping mechanisms 30 may share one third slide rail 3213; that is, two first slide rails 3211 of the two taping mechanisms 30 are connected to the same third slide rail 3213. In other embodiments of the present application, the third slide rails 3213 of the two taping mechanisms 30 may be different.

The major surface of the prismatic battery cell has four side edges, and two opposite side edges of the four side edges extend in the same direction. Two taping mechanisms 30 are provided. One taping mechanism 30 may be configured to attach an adhesive tape to the two opposite side edges of the prismatic battery cell, and the other taping mechanism 30 may be configured to attach the adhesive tape to the other two opposite side edges of the prismatic battery cell, thereby achieving the taping of the four side edges of the major surface of the prismatic battery cell.

The embodiments of the present application further provide a method for taping a battery cell. FIG. 17 is a flowchart of a method for taping a battery cell according to some embodiments of the present application. Referring to FIG. 17, the method includes:
step S71, fixing the battery cell to a first preset position of a base by using a positioning mechanism; and
step S72, controlling a taping assembly to adsorb an adhesive tape from a placement platform, and to move from the placement platform to the first preset position to attach the adhesive tape to the battery cell.

The method for taping a battery cell according to the embodiments of the present application may be applied to the battery cell taping device in the above embodiments.

According to the method for taping a battery cell in the embodiments of the present application, automatic taping of the battery cell can be implemented, such that the taping speed is relatively high, and the taping efficiency is relatively high, thereby improving the production efficiency of a battery. In addition, automatic taping reduces human operations, thereby saving labor costs.

According to some embodiments of the present application, step S71 includes:
step S711, placing the battery cell on a conveying platform; and
step S712, controlling a power assembly to operate to drive the conveying platform to move, such that the battery cell moves to the first preset position.

According to some embodiments of the present application, the base includes a support, a conveying platform, and a power assembly. The conveying platform is located on the support, and the conveying platform is configured to place the battery cell. The power assembly is connected to the support, and the power assembly is configured to drive the conveying platform to move.

In the embodiments of the present application, the power assembly drives the conveying platform to move, such that the battery cell can move to the first preset position. After the battery cell moves to the first preset position, the power assembly is controlled to stop operating, such that the battery cell can move to the first preset position. In this way, the movement of the to-be-taped member is controlled, which is more convenient.

According to some embodiments of the present application, step S712 includes:
step S7121, detecting, by a distance sensor, a distance between the distance sensor and the battery cell, and conveying the distance between the distance sensor and the battery cell to a controller; and
step S7122, controlling, by the controller, the power assembly to stop operating in response to the distance between the distance sensor and the battery cell being less than or equal to a preset distance value.

In the embodiments of the present application, the distance sensor is located on the support to ensure the stability of the distance sensor. The distance sensor may be arranged downstream of the movement direction of the battery cell, such that during the movement of the battery cell, the distance between the distance sensor and the battery cell detected by the distance sensor gradually decreases.

In the embodiments of the present application, on the basis of the distance between the distance sensor and the battery cell detected by the distance sensor, the controller controls the operation of the power assembly based on the distance between the distance sensor and the battery cell to implement automated control on the position of the battery cell, such that labor costs are reduced, and the taping apparatus is more automated.

According to some embodiments of the present application, step S71 further includes:
step S713, controlling a first drive assembly to drive a first stop block to move, such that at least a part of the first stop block is located at a second preset position to block the battery cell, thereby enabling the battery cell to be located at the first preset position, the first preset position being adjacent to the second preset position in the movement direction of the battery cell.

In the embodiments of the present application, the conveying platform conveys the battery cell to move, and the movement direction of the conveying platform is the first direction X. The first preset position is adjacent to the second preset position in the first direction X, and the second preset position is located downstream of the movement path of the battery cell.

In the embodiments of the present application, during the taping process, the first drive assembly drives the first stop block to move to the second preset position. When the battery cell moves to the first preset position adjacent to the second preset position, the first stop block may block the movement of the battery cell, and the battery cell may not continue to move under the action of inertia, thereby improving the accuracy of the positioning mechanism in positioning the battery cell.

According to some embodiments of the present application, in the case that the battery cell is located at the first preset position, step S71 further includes:
step S714, controlling a second drive assembly to drive a second stop block to move, such that the battery cell is located between the first stop block and the second stop block.

In the embodiments of the present application, the second direction Y may be perpendicular to the first direction X. Step S714 may be performed after pausing for 1-3 seconds after the completion of step S713, so as to ensure that the battery cell has been blocked by the first stop block to be located at the first preset position.

In the embodiments of the present application, when the battery cell is located at the first preset position, the battery cell is located between the first stop block and the second stop block, such that two opposite sides of the battery cell are both blocked. This provides a better positioning effect on the battery cell, reduces the possibility of the movement of the battery cell, and improves the subsequent taping effect.

According to some embodiments of the present application, step S72 includes:
step S721, controlling a second slide rail to move along the track of a first slide rail, such that a taping element moves to the placement platform to adsorb the adhesive tape;
step S722, controlling the second slide rail to move along the track of the first slide rail, such that the taping element moves to the battery cell; and
step S723, controlling the taping element to move along the track of the second slide rail, such that the taping element moves toward the battery cell to attach the adhesive tape to the battery cell.

According to some embodiments of the present application, the taping assembly includes a sliding element and a taping element. The sliding element includes a first slide rail and a second slide rail. The second slide rail is connected to the first slide rail, the second slide rail may move along the track of the first slide rail, the track of the first slide rail is parallel to the second direction, and the track of the second slide rail is perpendicular to the to-be-taped surface of the battery cell. The taping element is connected to the second slide rail, and the taping element may move along the track of the second slide rail.

In the embodiments of the present application, by arranging the first slide rail and the second slide rail, the taping element may move in at least two directions. The taping element can adsorb the adhesive tape on the placement platform, and meanwhile, can convey the adhesive tape on the placement platform to the first preset position and attach the adhesive tape to the battery cell.

The embodiments of the present application provide a taping apparatus. The taping apparatus includes a base 10, a positioning mechanism 20, a taping mechanism 30, a distance sensor 40, a controller 50, and an image acquisition mechanism 60.

The base 10 includes a support 11, a conveying platform 12, and a power assembly 13. The conveying platform 12 is located on the support 11, and the conveying platform 12 is configured to place a to-be-taped member 100. The power assembly 13 is connected to the support 11, and the power assembly 13 is configured to drive the conveying platform 12 to move, such that the to-be-taped member 100 moves to the first preset position. Anti-falling barrier rods 14 are arranged at side edges of the surface, on which the conveying platform 12 is arranged, of the support 11.

The positioning mechanism 20 includes a first drive assembly 21, a first stop block 22, a second drive assembly 23, and a second stop block 24. The first drive assembly 21 and the second drive assembly 23 are connected to the support 11, and the first stop block 22 is connected to the first drive assembly 21. The first drive assembly 21 is configured to drive the first stop block 22 to move, such that at least a part of the first stop block 22 is located at a second preset position to block the to-be-taped member 100. As a result, the to-be-taped member 100 is located at the first preset position, and the first preset position is adjacent to the second preset position in the first direction X. The second drive assembly 23 and the first drive assembly 21 are located on two opposite sides of the support 11 disposed in a second direction Y, the second direction Y intersecting with the first direction X. The second stop block 24 is connected to the second drive assembly 23. The second drive assembly 23 is configured to drive the second stop block 24 to move, such that in the case that the to-be-taped member 100 is located at the first preset position, the to-be-taped member 100 is located between the first stop block 22 and the second stop block 24.

The first stop block 22 includes a first stop rod 221 and a second stop rod 222. The first stop rod 221 is connected to the first drive assembly 21, the second stop rod 222 is connected to the first stop rod 221, and the first stop rod 221 intersects with the second stop rod 222. In the case that the to-be-taped member 100 is located at the first preset position, the first stop rod 221 and the second stop rod 222 are respectively fitted to two adjacent side edges of the to-be-taped member 100.

The second stop block 24 includes a third stop rod 241 and a fourth stop rod 242. The third stop rod 241 is connected to the second drive assembly 23, the fourth stop rod 242 is connected to the third stop rod 241, and the third stop rod 241 intersects with the fourth stop rod 242. In the case that the to-be-taped member 100 is located at the first preset position, the third stop rod 241 and the fourth stop rod 242 are respectively fitted to two adjacent side edges of the to-be-taped member 100. The third stop rod 241 is opposite to the first stop rod 221, and the fourth stop rod 242 is opposite to the second stop rod 222.

The taping mechanism 30 includes a placement platform 31 and a taping assembly 32. The placement platform 31 includes a support plate 311. The support plate 311 is provided with a first end 3111 and a second end 3112 opposite to each other. The adhesive tape includes a plurality of adhesive strips 201 disposed side by side, the arrangement direction of the plurality of adhesive strips 201 is the same as the arrangement direction of the first end 3111 and the second end 3112, the plurality of adhesive strips 201 are located between the first end 3111 and the second end 3112, and the distance between the adhesive strip 201, close to the second end 3112, of the plurality of adhesive strips 201 and the second end 3112 remains constant.

The placement platform 31 includes a stop strip 312 and first elastic elements 313. The stop strip 312 and the adhesive strips 201 are located on the same side of the support plate 311, the stop strip 312 is close to the second end 3112, the plurality of adhesive strips 201 are located between the first end 3111 and the stop strip 312, the adhesive strip 201, close to the stop strip 312, of the plurality of adhesive strips 201 abuts against the stop strip 312, the first elastic elements 313 are located on a side, facing away from the stop strip 312, of the support plate 311, and the elastic elements are connected to the support plate 311. The adhesive tape further includes a release paper 202, the plurality of adhesive strips 201 are all located on the release paper 202, a portion, on which the adhesive strips 201 are arranged, of the release paper 202 is fitted to a plate surface of the support plate 311, and the other portion of the release paper 202 passes through the second end 3112 to be connected to the first elastic elements 313.

The first elastic elements 313 are connected to the support plate 311 through first adjusting bolts 314, and the first adjusting bolts 314 are configured to adjust the distances between the first elastic elements 313 and the second end 3112.

The placement platform 31 further includes second elastic elements 315. The second elastic elements 315 and the adhesive strips 201 are located on the same side of the support plate 311. The second elastic elements 315 are connected to the support plate 311, and the second elastic elements 315 abut against an end, away from the second end 3112, of the adhesive strip 201. The second elastic elements 315 are movably connected to the support plate 311 through second adjusting bolts 316, and the second adjusting bolts 316 are configured to adjust the distances between the second elastic elements 315 and the second end 3112.

The placement platform 31 further includes limiting strips 317. The limiting strips 317 are located on the support plate 311, and the limiting strips 317 are located on two opposite sides of the adhesive strips 201 in the length direction.

The positioning holes 33 are formed in the surface, facing the first stop block 22, of the taping assembly 32, and the positioning pins 25 are arranged on the surface, facing the taping assembly 32, of the first stop block 22. The taping assembly 32 includes a sliding element 321 and a taping element 322. The sliding element 321 includes a first slide rail 3211, a second slide rail 3212, and a third slide rail 3213. The second slide rail 3212 is connected to the first slide rail 3211, and the second slide rail 3212 may move along the track of the first slide rail 3211. The track of the first slide rail 3211 is parallel to the arrangement direction of the placement platform 31 and the first preset position, and the track of the second slide rail 3212 is perpendicular to the to-be-taped surface of the to-be-taped member 100. The taping element 322 is connected to the second slide rail 3212, and the taping element 322 may move along the track of the second slide rail 3212. The track of the third slide rail 3213 extends in the first direction X, the first slide rail 3211 is connected to the third slide rail 3213, and the first slide rail 3211 may move along the track of the third slide rail 3213.

The taping element 322 includes a connecting member 3221, a taping plate 3222, connecting rods 3223, and buffer springs 3224. The connecting member 3221 is connected to the second slide rail 3212, and the taping plate 3222 is located on a side, facing the to-be-taped member 100, of the connecting member 3221. Two ends of the connecting rods 3223 are connected to the connecting member 3221 and the taping plate 3222, respectively. The buffer springs 3224 sleeve the connecting rods 3223, and two ends of the buffer springs 3224 abut against the taping plate 3222 and the connecting member 3221, respectively.

The distance sensor 40 is located on the support 11, and the distance sensor 40 is configured to detect a distance between the distance sensor 40 and the to-be-taped member 100. The controller 50 is in communication connection with both the distance sensor 40 and the power assembly 13. The distance sensor 40 is further configured to send the distance between the distance sensor 40 and the to-be-taped member 100 to the controller 50, and the controller 50 is configured to control the power assembly 13 to stop operating on the basis that the distance between the distance sensor 40 and the to-be-taped member 100 is less than or equal to a preset distance value. The taping apparatus further includes an image acquisition mechanism 60, the image acquisition mechanism 60 being configured to acquire an image of the to-be-taped member 100 after taping. The image acquisition mechanism 60 is in communication connection with the controller 50, the image acquisition mechanism 60 sends the acquired image of the to-be-taped member 100 after taping to the controller 50, and the controller 50 may determine the taping quality on the basis of the image.

The taping apparatus includes two taping mechanisms 30. One taping mechanism 30 of the two taping mechanisms 30 is configured to attach an adhesive tape to two opposite side edges of the prismatic battery cell, and the other taping mechanism 30 of the two taping mechanisms 30 is configured to attach the adhesive tape to the other two opposite side edges of the prismatic battery cell.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A taping apparatus, the taping apparatus comprising:
a base (10), configured to place a to-be-taped member (100);
a positioning mechanism (20), configured to fix the to-be-taped member (100) to a first preset position of the base (10); and
a taping mechanism (30), comprising a placement platform (31) and a taping assembly (32), the placement platform (31) being configured to place an adhesive tape (200), and the taping assembly (32) being configured to adsorb the adhesive tape (200) and move from the placement platform (31) to the first preset position to attach the adhesive tape (200) to the to-be-taped member (100).

2. The taping apparatus according to claim 1, wherein the base (10) comprises:
a support (11);
a conveying platform (12), located on the support (11), the conveying platform (12) being configured to place the to-be-taped member (100); and
a power assembly (13), connected to the support (11), the power assembly (13) being configured to drive the conveying platform (12) to move, such that the to-be-taped member (100) moves to the first preset position.

3. The taping apparatus according to claim 2, wherein anti-falling barrier rods (14) are arranged at side edges of a surface, on which the conveying platform (12) is arranged, of the support (11).

4. The taping apparatus according to claim 2 or 3, wherein the positioning mechanism (20) is configured to block movement of the to-be-taped member (100) to fix the to-be-taped member (100) to the first preset position.

5. The taping apparatus according to claim 4, wherein a movement direction of the to-be-taped member (100) is a first direction, and the positioning mechanism (20) comprises:
a first drive assembly (21), connected to the support (11); and
a first stop block (22), connected to the first drive assembly (21);
wherein the first drive assembly (21) is configured to drive the first stop block (22) to move, such that at least a part of the first stop block (22) is located at a second preset position to block the to-be-taped member (100), thereby enabling the to-be-taped member (100) to be located at the first preset position, the first preset position being adjacent to the second preset position in the first direction.

6. The taping apparatus according to claim 5, wherein positioning holes (33) are formed in one of a surface, facing the first stop block (22), of the taping assembly (32) and a surface, facing the taping assembly (32), of the first stop block (22), positioning pins (25) are arranged on the other of the surface, facing the first stop block (22), of the taping assembly (32) and the surface, facing the taping assembly (32), of the first stop block (22), and during a process of taping of the to-be-taped member (100) by the taping assembly (32), the positioning pins (25) are located in the positioning holes (33).

7. The taping apparatus according to claim 6, wherein the first stop block (22) comprises:
a first stop rod (221), connected to the first drive assembly (21); and
a second stop rod (222), connected to the first stop rod (221), the first stop rod (221) intersecting with the second stop rod (222), and in a case that the to-be-taped member (100) is located at the first preset position, the first stop rod (221) and the second stop rod (222) being fitted to two adjacent side edges of the to-be-taped member (100), respectively.

8. The taping apparatus according to claim 7, wherein the positioning mechanism (20) further comprises:
a second drive assembly (23), connected to the support (11), the second drive assembly (23) and the first drive assembly (21) being located on two opposite sides of the support (11) disposed in a second direction, and the second direction intersecting the first direction; and
a second stop block (24), connected to the second drive assembly (23);
wherein the second drive assembly (23) is configured to drive the second stop block (24) to move, such that in the case that the to-be-taped member (100) is located at the first preset position, the to-be-taped member (100) is located between the first stop block (22) and the second stop block (24).

9. The taping apparatus according to claim 8, wherein the second stop block (24) comprises:
a third stop rod (241), connected to the second drive assembly (23); and
a fourth stop rod (242), connected to the third stop rod (241), the third stop rod (241) intersecting with the fourth stop rod (242), in a case that the to-be-taped member (100) is located at the first preset position, the third stop rod (241) and the fourth stop rod (242) being fitted to two adjacent side edges of the to-be-taped member (100), respectively, the third stop rod (241) being opposite to the first stop rod (221), and the fourth stop rod (242) being opposite to the second stop rod (222).

10. The taping apparatus according to any one of claims 2 to 9, wherein the taping apparatus further comprises:
a distance sensor (40), located on the support (11), the distance sensor (40) being configured to detect a distance between the distance sensor (40) and the to-be-taped member (100); and
a controller (50), in communication connection with both the distance sensor (40) and the power assembly (13);
wherein the distance sensor (40) is further configured to send the distance between the distance sensor (40) and the to-be-taped member (100) to the controller (50), and the controller (50) is configured to control the power assembly (13) to stop operating on the basis that the distance between the distance sensor (40) and the to-be-taped member (100) is less than or equal to a preset distance value.

11. The taping apparatus according to any one of claims 1 to 10, wherein the placement platform (31) comprises:
a support plate (311), provided with a first end (3111) and a second end (3112) opposite to each other;
wherein the adhesive tape (200) comprises a plurality of adhesive strips (201) disposed side by side, an arrangement direction of the plurality of adhesive strips (201) is the same as an arrangement direction of the first end (3111) and the second end (3112), the plurality of adhesive strips (201) are located between the first end (3111) and the second end (3112), and a distance between an adhesive strip (201), close to the second end (3112), of the plurality of adhesive strips (201) and the second end (3112) remains constant.

12. The taping apparatus according to claim 11, wherein the placement platform (31) further comprises:
a stop strip (312), located on a same side of the support plate (311) as the adhesive strips (201), the stop strip (312) being close to the second end (3112), the plurality of adhesive strips (201) being located between the first end (3111) and the stop strip (312), and an adhesive strip (201), close to the stop strip (312), of the plurality of adhesive strips (201) abutting against the stop strip (312); and
first elastic elements (313), located on a side, facing away from the stop strip (312), of the support plate (311), the first elastic elements (313) being connected to the support plate (311);
wherein the adhesive tape (200) further comprises a release paper (202), the plurality of adhesive strips (201) are all located on the release paper (202), a portion, on which the adhesive strips (201) are arranged, of the release paper (202) is fitted to a plate surface of the support plate (311), and the other portion of the release paper (202) passes through the second end (3112) to be connected to the first elastic elements (313).

13. The taping apparatus according to claim 12, wherein the first elastic elements (313) are connected to the support plate (311) through first adjusting bolts (314), and the first adjusting bolts (314) are configured to adjust distances between the first elastic elements (313) and the second end (3112).

14. The taping apparatus according to claim 12, wherein the placement platform (31) further comprises:
second elastic elements (315), located on the same side of the support plate (311) as the adhesive strips (201), the second elastic elements (315) being connected to the support plate (311), and the second elastic elements (315) abutting against an end, away from the second end (3112), of the adhesive strip (201).

15. The taping apparatus according to claim 14, wherein the second elastic elements (315) are movably connected to the support plate (311) through second adjusting bolts (316), and the second adjusting bolts (316) are configured to adjust distances between the second elastic elements (315) and the second end (3112).

16. The taping apparatus according to any one of claims 11 to 15, wherein the placement platform (31) further comprises:
limiting strips (317), located on the support plate (311), the limiting strips (317) being located on two opposite sides of the adhesive strips (201) in a length direction.

17. The taping apparatus according to any one of claims 1 to 16, wherein the taping assembly (32) comprises:
a sliding element (321), comprising a first slide rail (3211) and a second slide rail (3212), the second slide rail (3212) being connected to the first slide rail (3211), the second slide rail (3212) being movable along a track of the first slide rail (3211), the track of the first slide rail (3211) being parallel to an arrangement direction of the placement platform (31) and the first preset position, and a track of the second slide rail (3212) being perpendicular to a to-be-taped surface of the to-be-taped member (100); and
a taping element (322), connected to the second slide rail (3212), the taping element (322) being movable along the track of the second slide rail (3212).

18. The taping apparatus according to claim 17, wherein the taping element (322) comprises:
a connecting member (3221), connected to the second slide rail (3212);
a taping plate (3222), located on a side, facing the to-be-taped member (100), of the connecting member (3221);
connecting rods (3223), two ends of the connecting rods (3223) being connected to the connecting member (3221) and the taping plate (3222), respectively; and
buffer springs (3224), sleeving the connecting rods (3223), two ends of the buffer springs (3224) abutting against the taping plate (3222) and the connecting member (3221), respectively.

19. The taping apparatus according to any one of claims 1 to 18, wherein the taping apparatus further comprises:
an image acquisition mechanism (60), configured to acquire an image of the to-be-taped member (100) after taping.

20. A battery cell taping device, the battery cell taping device comprising the taping apparatus according to any one of claims 1 to 19, the taping apparatus being configured to attach an adhesive tape to a battery cell.

21. The battery cell taping device according to claim 20, wherein the battery cell comprises a prismatic battery cell, and the taping apparatus comprises two taping mechanisms (30);
one taping mechanism (30) of the two taping mechanisms (30) is configured to attach an adhesive tape to two opposite side edges of the prismatic battery cell, and the other taping mechanism (30) of the two taping mechanisms (30) is configured to attach the adhesive tape to the other two opposite side edges of the prismatic battery cell.

22. A method for taping a battery cell, the method comprising:
fixing the battery cell to a first preset position of a base by using a positioning mechanism; and
controlling a taping assembly to adsorb an adhesive tape from a placement platform, and to move from the placement platform to the first preset position to attach the adhesive tape to the battery cell.

23. The method according to claim 22, wherein fixing the battery cell to the first preset position of the base by using the positioning mechanism comprises:
placing the battery cell on a conveying platform; and
controlling a power assembly to operate to drive the conveying platform to move, such that the battery cell moves to the first preset position.

24. The method according to claim 23, wherein controlling the power assembly to operate to drive the conveying platform to move, such that the battery cell moves to the first preset position comprises:
detecting, by a distance sensor, a distance between the distance sensor and the battery cell, and conveying the distance between the distance sensor and the battery cell to a controller; and
controlling, by the controller, the power assembly to stop operating in response to the distance between the distance sensor and the battery cell being less than or equal to a preset distance value.

25. The method according to any one of claims 22 to 24, wherein fixing the battery cell to the first preset position of the base by using the positioning mechanism further comprises:
controlling a first drive assembly to drive a first stop block to move, such that at least a part of the first stop block is located at a second preset position to block the battery cell, thereby enabling the battery cell to be located at the first preset position, the first preset position being adjacent to the second preset position in a movement direction of the battery cell.

26. The method according to claim 25, wherein in a case that the battery cell is located at the first preset position, fixing the battery cell to the first preset position of the base by using the positioning mechanism further comprises:
controlling a second drive assembly to drive a second stop block to move, such that the battery cell is located between the first stop block and the second stop block.

27. The method according to any one of claims 22 to 26, wherein controlling the taping assembly to adsorb the adhesive tape from the placement platform, and to move from the placement platform to the first preset position to attach the adhesive tape to the battery cell comprises:
controlling a second slide rail to move along a track of a first slide rail, such that a taping element moves to the placement platform to adsorb the adhesive tape;
controlling the second slide rail to move along the track of the first slide rail, such that the taping element moves to the battery cell; and
controlling the taping element to move along a track of the second slide rail, such that the taping element moves toward the battery cell to attach the adhesive tape to the battery cell.
